# EUROPEAN PATENT APPLICATION

(11) **EP 1 919 182 A2**
(43) Date of publication of application: **07.05.2008**
(21) Application number: 07115350.6
(22) Date of filing: 30.08.2007
(51) Int. Cl.: H04N 1/333

(54) **Image processing apparatus and control method for image processing apparatus**

(30) Priority: 31.10.2006 JP 2006296135
(71) Applicant: Canon Kabushiki Kaisha, Ohta-Ku, Tokyo 146-8501 (JP)
(72) Inventor: ISSHIKI, Naohiro, Ohta-ku Tokyo (JP)
(74) Representative: Sharp, Alan Cooper

(57) **Abstract**

An image processing apparatus (1001) includes an input unit (302) configured to input image data, a vectorization unit (308) configured to convert the image data input by the input unit (302) into vectorized data by vectorizing at least one portion of the image data, a receiving unit (303) configured to receive a setting for outputting by an external image output apparatus an image based on the image data input by the input unit (302), and a sending unit configured to send to the external image output apparatus one of the image data input by the input unit (302) or the vectorized data obtained by the vectorization unit (308) based on the setting received by the receiving unit (303).

## Description

### BACKGROUND OF THE INVENTION

### Field of the Invention

The present invention relates to an image processing apparatus connected to a network and having a remote copying function.

### Description of the Related Art

Japanese Patent Application Laid-Open No. 11-331455 discusses a method for copying an image by outputting an image input via an image input device connected to a network with a separate image output device connected to the network.

Such a conventional method for copying an image by inputting and outputting an image with different devices connected to a network is called "remote copying".

In addition, Japanese Patent Application Laid-Open No. 05-314251 discusses a method using a facsimile apparatus, in which a data sending facsimile apparatus converts bitmap image data into vectorized data and sends the vectorized data to a data receiving facsimile apparatus. The data receiving facsimile apparatus converts the received vectorized data into image data to visualize the image data.

In a conventional remote copying method discussed in Japanese Patent Application Laid-Open No. 11-331455, an image input device sends raster image data to an image output device.

In such a conventional method, when a resolution of image data sent from an image input device differs from a resolution of image data output from an image output device, it is necessary to perform resolution conversion. When a resolution of an image is converted, the image quality may degrade.

Meanwhile, in the conventional method discussed in Japanese Patent Application Laid-Open No. 05-314251, a data sending facsimile apparatus sends vectorized image data to a data receiving facsimile apparatus. Accordingly, it is not necessary to convert the resolution of raster image data. Thus, the degradation of image quality can be reduced.

However, it takes a relatively long time to perform image data vectorization processing and processing for converting vectorized image data into raster image data. Accordingly, productivity may be low in performing remote copying.

In the method discussed in Japanese Patent Application Laid-Open No. 05-314251, a data sending facsimile apparatus sends to a data receiving facsimile apparatus non-vectorized image data according to a capacity of the data receiving facsimile apparatus.

Such a conventional method considers the capacity of the data receiving facsimile apparatus but does not consider a content of an instruction (e.g., "to prioritize image quality" or "to prioritize print speed") generated by a user who instructs sending of the data.

### SUMMARY OF THE INVENTION

The present invention is directed to an image processing apparatus capable of allowing a user to perform desired remote copying according to a content of a setting for remote copying instructed by the user in the case of performing remote copying.

According to a first aspect of the present invention, there is provided an image processing apparatus as specified in claims 1 to 18. According to a second aspect of the present invention, there is provided a method as specified in claims 19 and 20. According to a third aspect of the present invention, there is provided a control program as specified in claims 21 and 22.

Further features and aspects of the present invention will become apparent from the following detailed description of exemplary embodiments with reference to the attached drawings.

### BRIEF DESCRIPTION OF THE DRAWINGS

The accompanying drawings, which are incorporated in and constitute a part of the specification, illustrate exemplary embodiments, features, and aspects of the invention and, together with the description, serve to explain the principle of the invention.

Fig. 1 illustrates an exemplary configuration of a system according to an exemplary embodiment of the present invention.

Fig. 2 illustrates an exemplary configuration of a control unit of each device according to the exemplary embodiment of the present invention.

Fig. 3 illustrates an exemplary software configuration of a controller according to the exemplary embodiment of the present invention.

Fig. 4 is a flow chart illustrating exemplary vectorization processing according to the exemplary embodiment of the present invention.

Fig. 5 illustrates an exemplary block selection in the vectorization processing according to the exemplary embodiment of the present invention.

Fig. 6 illustrates exemplary document analysis output format (DAOF) data according to the exemplary embodiment of the present invention.

Fig. 7 is a flow chart illustrating an exemplary flow of remote copy processing according to the exemplary embodiment of the present invention.

Fig. 8 illustrates an exemplary screen displayed on an operation unit according to the exemplary embodiment of the present invention.

Fig. 9 is a flow chart illustrating an exemplary flow of vectorization determination processing according to the exemplary embodiment of the present invention.

Fig. 10 is a flow chart illustrating an exemplary flow of color conversion determination processing according to the exemplary embodiment of the present invention.

Fig. 11 is a flow chart illustrating an exemplary flow of data conversion processing performed during remote copy processing according to the exemplary embodiment of the present invention.

Fig. 12 is a flow chart illustrating an exemplary flow of remote copy receiving processing according to the exemplary embodiment of the present invention.

Fig. 13 is a flow chart illustrating an exemplary flow of data conversion processing performed during remote copy processing according to the exemplary embodiment of the present invention.

Fig. 14 illustrates various parameters used in remote copy exemplary cases 1 and 2 according to the exemplary embodiment of the present invention.

Fig. 15A and Fig. 15B each illustrate a processing flow in the case of the remote copy exemplary case 1 according to the exemplary embodiment of the present invention.

Fig. 16 illustrates a processing flow in the case of the remote copy exemplary case 2 according to the exemplary embodiment of the present invention.

Fig. 17 illustrates various parameters used in a remote copy exemplary case 3 according to the exemplary embodiment of the present invention.

Fig. 18A and Fig. 18B each illustrate a processing flow in the case of the remote copy exemplary case 3 according to the exemplary embodiment of the present invention.

Fig. 19 illustrates an exemplary processing flow in the case of the remote copy exemplary case 3 according to the exemplary embodiment of the present invention.

### DETAILED DESCRIPTION OF THE EMBODIMENTS

Various exemplary embodiments, features, and aspects of the present invention will now herein be described in detail with reference to the drawings. It is to be noted that the relative arrangement of the components, the numerical expressions and numerical values set forth in these embodiments are not intended to limit the scope of the present invention unless it is specifically stated otherwise.

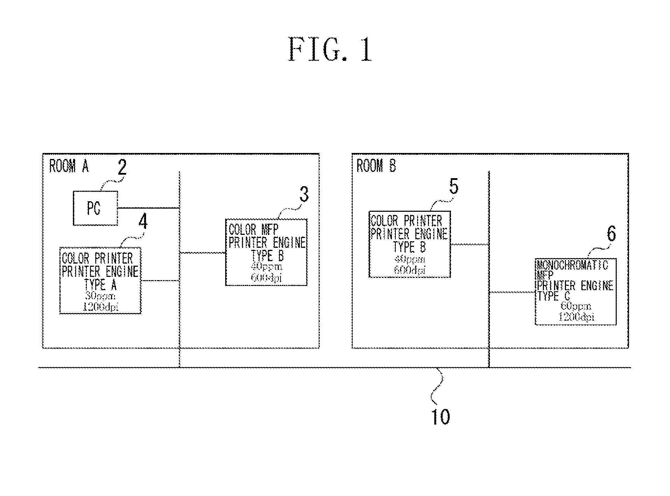

Now, an exemplary embodiment of the present invention will be described below. Fig. 1 illustrates an exemplary configuration of an entire image processing system according to the present exemplary embodiment.

Referring to Fig. 1, the image processing system includes a personal computer (PC) 2, a color multifunction peripheral (MFP) 3, a color printer 4, a color printer 5, and a monochromatic MFP 6 in communication with one another via a local area network (LAN) 10.

The type of a printer engine (printing unit) mounted on the color MFP 3 is "B". With respect to the type B printer engine of the color MFP 3, a print speed in the case of A4-size paper is 40 pages per minute (ppm) and a print resolution is 600 dots per inch (dpi). The type B printer engine of the color MFP 3 can perform both color printing and monochromatic printing.

The type of a printer engine mounted on the color printer 4 is "A". With respect to the type A printer engine of the color printer 4, a print speed in the case of A4-size paper is 30 ppm and a print resolution is 600 dpi. The type A printer engine of the color printer 4 can perform both color printing and monochromatic printing.

The type of a printer engine mounted on the color printer 5 is "B", just as in the case of the color MFP 3. With respect to the type B printer engine of the color printer 5, a print speed in the case of A4-size paper is 40 ppm and a print resolution is 600 dpi. The type B printer engine of the color printer 5 can perform both color printing and monochromatic printing.

The type of a printer engine mounted on the monochromatic MFP 6 is "C". With respect to the type C printer engine of the monochromatic MFP 6, a print speed in the case of A4-size paper is 60 ppm and a print resolution is 1,200 dpi. The type C printer engine of the monochromatic MFP 6 can perform only monochromatic printing. The type C printer engine of the monochromatic MFP 6 is dedicated for use in monochromatic printing, but the monochromatic MFP 6 includes a scanner having a scanning resolution of 1,200 dpi and capable of performing color scanning.

In Fig. 1, the PC 2, the color MFP 3, and the color printer 4 are installed in a room A. The color printer 5 and the monochromatic MFP 6 are installed in a room B. However, the physical arrangement of the above-described apparatuses connected to the LAN 10 is not limited to this. In addition, a PC, various servers, a printer, and an MFP other than the above-described apparatuses can be connected to the LAN 10.

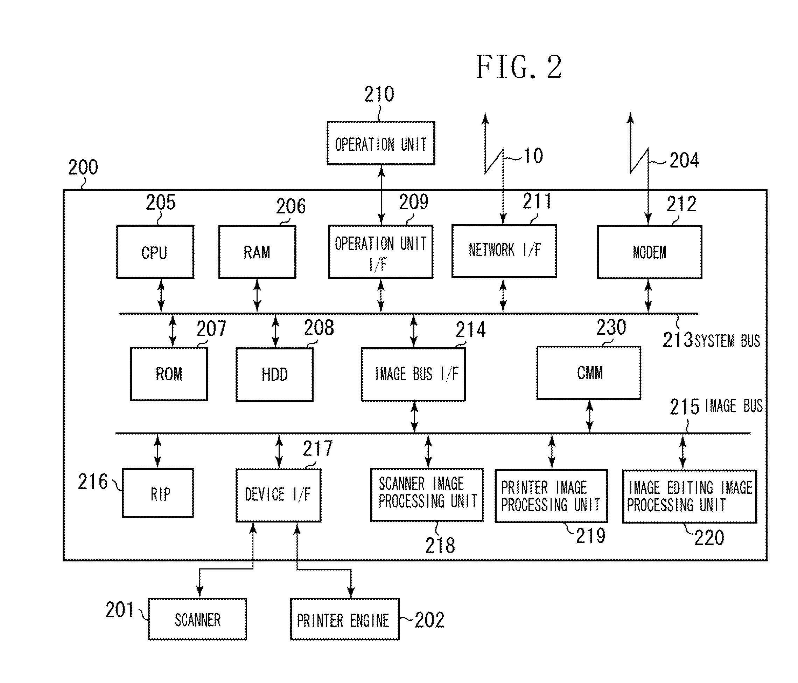

Fig. 2 illustrates an exemplary configuration of a control unit (controller) 200 of the color MFP 3 according to the present exemplary embodiment.

Referring to Fig. 2, the control unit 200 includes a central processing unit (CPU) 205, a random access memory (RAM) 206, an operation unit interface (I/F) 209, a network I/F 211, a modem 212, a read-only memory (ROM) 207, a hard disk drive (HDD) 208, and an image bus I/F 214, which are in communication with one another via a system bus 213. In addition, the control unit 200 includes a color management module (CMM) 230, a raster image processor (RIP) 216, a device I/F 217, a scanner image processing unit 218, a printer image processing unit 219, and an image editing image processing unit 220, which are in communication with one other via an image bus 215.

Furthermore, the control unit 200 is connected to a scanner (image input device) 201 and a printer engine (image output device) 202 via the device I/F 217. The control unit 200 controls the scanner 201 and the printer engine 202 to read image data with the scanner 201 and print or output the read image data with the printer engine 202. Moreover, the control unit 200 is connected to the LAN 10 and a public line 204 via the network I/F 211 and the modem 212, respectively. The control unit 200 performs a control operation to input and output image information and device information via the LAN 10.

The CPU 205 controls the entire color MFP 3. The RAM 206 is a system work memory for the CPU 205. The RAM 206 also serves as an image memory for temporarily storing input image data.

Furthermore, the ROM 207 is a boot ROM that stores a system boot program. The HDD 208 stores system software used for various processing and input image data.

The operation unit I/F 209 is an interface to an operation unit 210. The operation unit 210 includes a display screen for displaying image data. The operation unit I/F 209 is used for outputting data for an operation screen to the operation unit 210. In addition, the operation unit I/F 209 is used for transmitting to the CPU 205 information entered by an operator via the operation unit 210.

The network I/F 211 includes a LAN card. The network I/F 211 is connected to the LAN 10 and is used for inputting and outputting information between the color MFP 3 and an external apparatus. The modem 212 is connected to the public line 204 and is used for inputting and outputting information between the color MFP 3 and an external apparatus.

The image bus I/F 214 is an interface between the system bus 213 and the image bus 215. The image bus I/F 214 is a bus bridge for converting a data structure. The image bus 215 is used for transferring image data at a high speed.

The RIP 216 rasterizes page description language (PDL) code and vectorized data (to be described below) into image data. The device I/F 217 connects the control unit 200 with the scanner 201 and the printer engine 202. The device I/F 217 is used for performing synchronous/asynchronous conversion on image data.

The scanner image processing unit 218 performs various processing, such as correction, and editing, on image data input by the scanner 201.

The printer image processing unit 219 performs processing, such as image correction and resolution conversion, on image data to be printed or output, according to the type of a printer engine.

The image editing image processing unit 220 performs various image processing on image data, such as rotation processing and compression/decompression processing.

The CMM 230 is a hardware module dedicated for use in color conversion processing (also referred to as "color space conversion processing") performed on image data according to a profile and calibration data.

Here, a "profile" refers to information such as a function for converting color image data expressed in a device-dependent color space into a device-independent color space (e.g., a Lab color space). The calibration data is a data for correcting a color reproduction characteristic of each of the scanner 201 and the printer engine 202 of the color MFP 3.

Here, the monochromatic MFP 6 includes a control unit similar to the control unit 200 of the color MFP 3, except that the control unit of the monochromatic MFP 6 does not include a CMM 230. Furthermore, the color printer 4 and the color printer 5 each include a control unit similar to the control unit 200 of the color MFP 3, except that the control unit of each of the color printer 4 and the color printer 5 is not connected to the scanner 201 and does not include a scanner image processing unit 218.

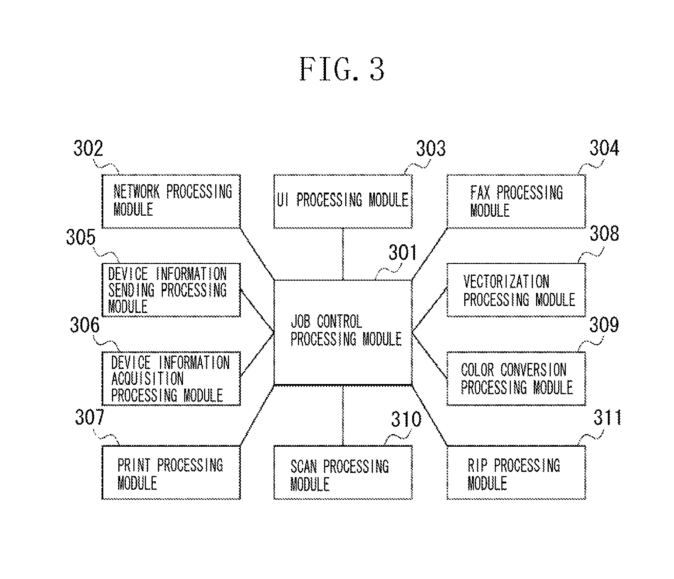

Fig. 3 illustrates an exemplary configuration of a controller software module operating on the control unit 200 of the color MFP 3 according to the present exemplary embodiment.

Each software module illustrated in Fig. 3 mainly operates on the CPU 205.

Referring to Fig. 3, the controller software module operating on the control unit 200 of the color MFP 3 includes a job control processing module 301, a network processing module 302, a user interface (UI) processing module 303, a facsimile processing module 304, a device information sending processing module 305, a device information acquisition processing module 306, a print processing module 307, a vectorization processing module 308, a color conversion processing module 309, a scan processing module 310, and a RIP processing module 311.

The job control processing module 301 in Fig. 3 controls each of the software modules illustrated in Fig. 3 and other software modules not illustrated in Fig. 3. The job control processing module 301 controls all jobs, such as a copy job, a print job, a scan job, and a facsimile transmission/receiving job generated within the color MFP 3.

The network processing module 302 is a module for controlling communication with an external apparatus performed mainly via the network I/F 211. The network processing module 302 controls communication with each apparatus connected to the LAN 10. When the network processing module 302 receives a control command and data from each apparatus on the LAN 10, the network processing module 302 notifies a content of the received control command and data to the job control processing module 301. In addition, the network processing module 302 sends the control command and the data to each apparatus on the LAN 10 according to an instruction from the job control processing module 301.

The UI processing module 303 is a module for performing a control operation related to the operation unit 210 and the operation unit I/F 209. The UI processing module 303 notifies a content of a user operation performed via the operation unit 210 to the job control processing module 301. Furthermore, the UI processing module 303 controls a content of a display on a display screen of the operation unit 210 according to an instruction from the job control processing module 301.

The facsimile processing module 304 is a module for controlling a facsimile function. The facsimile processing module 304 receives facsimile data via the modem 212. Then, the facsimile processing module 304 performs specific image processing for facsimile images on the received data, and then the facsimile processing module 304 transfers the processed image to the job control processing module 301. Moreover, the facsimile processing module 304 sends an image designated by the job control processing module 301 to a designated sending destination via facsimile.

The print processing module 307 is a module for controlling the image editing image processing unit 220, the printer image processing unit 219, and the printer engine 202 according to an instruction from the job control processing module 301 to perform printing of a designated image.

The print processing module 307 receives image data and information such as image information (a size, a color mode, and a resolution of the image data), layout information (information about whether the image data is to be offset and magnified or reduced and information about imposition of the image data), and output paper information (a size and print direction of the output print paper) from the job control processing module 301.

Furthermore, the print processing module 307 controls the image editing image processing unit 220 and the printer image processing unit 219 to perform appropriate image processing on image data. Moreover, the print processing module 307 controls the printer engine 202 to print the processed image data on a paper designated by an operator.

The scan processing module 310 controls the scanner 201 and the scanner image processing unit 218 according to an instruction from the job control processing module 301 to read a document placed on the scanner 201. Here, the instruction from the job control processing module 301 includes information about whether the image data is to be output or printed in a color mode or monochromatic mode. The scan processing module 310 performs processing according to the color/monochromatic mode instructed from the job control processing module 301.

That is, when the color mode is set to "color", the scan processing module 310 inputs a document with the scanner 201 as a color image. On the other hand, when the color mode is set to "monochromatic", the scan processing module 310 inputs a document with the scanner 201 as a monochromatic image. In addition, when the color mode is set to "Auto", the job control processing module 301 performs pre-scanning with the scanner 201 to determine whether the document is a color document or a monochromatic document. Then, the job control processing module 301 controls the scanner 201 to scan the document again according to the result of the determination to input an image of the document.

The scan processing module 310 is a module for performing scanning of a document placed on a document table of the scanner 201 and inputting a document image as digital data. Information about whether the input document image is color or monochromatic is sent to the job control processing module 301. Furthermore, the scan processing module 310 controls the scanner image processing unit 218 to perform appropriate image processing, such as image compression, on the input image. Then, the scan processing module 310 sends the processed input image to the job control processing module 301.

The vectorization processing module 308 performs vectorization processing on the image sent from the job control processing module 301. Then, the vectorization processing module 308 sends vectorized image data to the job control processing module 301. Here, the vectorization processing module 308 has previously performed vectorization on a reference image. Thus, the vectorization processing module 308 holds information about processing time required for vectorization processing. The vectorization processing will be described in detail below.

The color conversion processing module 309 performs color conversion processing on a designated image according to an instruction from the j ob control processing module 301. Then, the color conversion processing module 309 sends the color-converted image to the job control processing module 301.

The job control processing module 301 sends to the color conversion processing module 309 information about an input color space, information about an output color space, and an image data to which the color space is applied.

When the output color space information sent to the color conversion processing module 309 includes information about an input-device-independent color space (e.g., a Lab color space), the job control processing module 301 sends to the color conversion processing module 309 input profile information, which is information for converting the color space from an input-device-dependent input color space (for example, a red, green, and blue (RGB) color space) into a Lab color space, in addition to the above-described information.

In this case, the color conversion processing module 309 generates a lookup table (LUT) for mapping from an input color space to a Lab color space. The color conversion processing module 309 performs color conversion on an input image using the generated LUT.

When the input color space information sent to the color conversion processing module 309 includes information about a Lab color space, the job control processing module 301 sends output profile information for converting the color space from the Lab color space to an output-device-dependent output color space, in addition to the above-described information.

In this case, the color conversion processing module 309 generates an LUT for mapping from the Lab color space to an output color space according to the received output profile information. The color conversion processing module 309 performs color conversion on the input image using the generated LUT.

When both the input color space information and the output color space information include information about a device-dependent color space, the job control processing module 301 sends both an input profile and an output profile to the color conversion processing module 309.

In this case, the color conversion processing module 309 generates an LUT for directly mapping from the input color space to an output color space. The color conversion processing module 309 performs color conversion on the input image using the generated LUT.

If a CMM 230 is provided to the apparatus, the color conversion processing module 309 sets the generated LUT for the CMM 230 to perform color conversion utilizing the CMM 230. On the other hand, if no CMM 230 is provided to the apparatus, the CPU 205 performs color conversion processing using software.

Here, the color conversion processing module 309 previously performs color conversion on a reference image. Thus, the color conversion processing module 309 holds information about processing time required for color conversion processing in the case where only the input profile is designated.

In addition, the color conversion processing module 309 holds information about processing time required for color conversion processing in the case where only the output profile is designated. Furthermore, the color conversion processing module 309 holds information about processing time required for color conversion processing in the case where both the input profile and the output profile are designated.

The device information sending processing module 305 sends device information to a designated apparatus via the network processing module 302 according to an instruction from the job control processing module 301.

The device information includes information about a type of the printer engine, information about a resolution of the printer engine, information about a print speed of the printer engine, information about color conversion processing module 309 processing time 1, information about color conversion processing module 309 processing time 2, and an output profile. Here, the color conversion processing module 309 processing time 1 refers to processing time required in the case of using both the input profile and the output profile. Furthermore, the color conversion processing module 309 processing time 2 refers to processing time required in the case of using only the output profile.

In addition, the device information includes information about vectorization processing module 308 processing time and information about processing time for rasterizing document analysis output format (DAOF) data. That is, the device information includes information about the capacity and characteristics of the apparatus.

The device information acquisition processing module 306 sends a request for acquiring device information to a designated apparatus via the network processing module 302 according to an instruction from the job control processing module 301.

The RIP processing module 311 interprets Page Description Language (PDL) data and DAOF data (to be described in detail below) according to an instruction from the job control processing module 301 and controls the RIP 216 to render the interpreted data. Thus, the RIP processing module 311 rasterizes the data into bitmap image data.

In the present exemplary embodiment, the monochromatic MFP 6 also has a software configuration similar to the software configuration illustrated in Fig. 3. Furthermore, the color printer 4 and the color printer 5 each have a software configuration similar to the software configuration illustrated in Fig. 3, except that the color printer 4 and the color printer 5 include neither the facsimile processing module 304 nor the scan processing module 310.

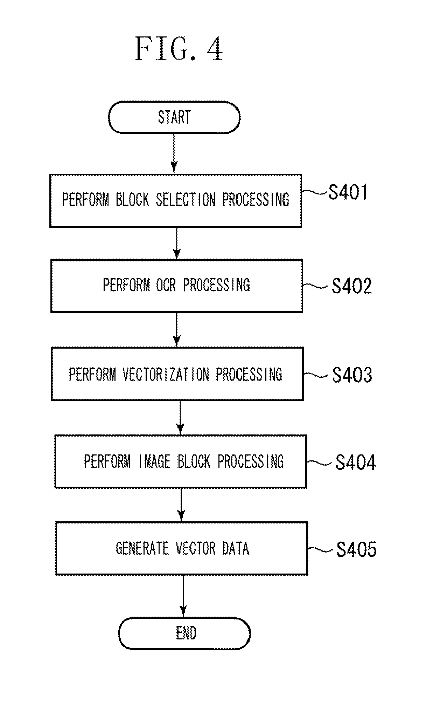

Fig. 4 is a flow chart illustrating an example of vectorization processing according to the present exemplary embodiment.

The vectorization processing is implemented by performing at least one of a plurality of types of processing, such as character recognition processing, outline processing, pattern recognition processing, and processing for converting into DAOF data, which will be described in detail below.

The vectorized data refers to an image defined as an expression for interpolating a plurality of pixels constituting a linear line or a curved line obtained by performing at least one of the above-described processing.

In the present exemplary embodiment, the vectorization processing includes processing for obtaining code data and font data by performing character recognition and mark recognition, in addition to the above-described processing types.

In addition, vectorized data includes data obtained by vectorizing at least one portion of a raster image. DAOF data is an example of the vectorized data according to the present exemplary embodiment.

In performing remote copying, if a resolution of a local device scanner and a resolution of a remote device printer differ from each other, it is required to convert the resolution of raster image data. The image quality of a raster image usually degrades after the resolution of the raster image is converted. Meanwhile, it is not required to convert the resolution of DAOF data in this case (e.g., it is sufficient to convert only coefficients in an expression for a linear line). Thus, the image quality cannot degrade.

The flow chart illustrated in Fig. 4 is performed by the CPU 205 of the control unit 200.

Referring to Fig. 4, in step S401, the CPU 205 performs block selection processing on a bitmap image instructed from the job control processing module 301.

The block selection processing refers to processing for classifying each block by detecting an attribute of each block after analyzing input raster image data and dividing the data into blocks for each cluster of objects included in the image. The attribute includes various types of attributes, such as "TEXT", "PHOTO", "LINE", "PICTURE", and "TABLE".

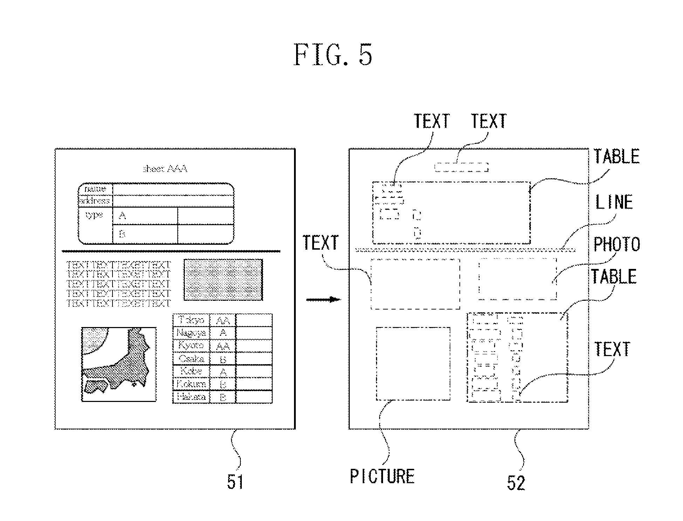

Fig. 5 illustrates an example of an input image that has been subjected to block selection processing according to the present exemplary embodiment. Referring to Fig. 5, a determination result 52 is a result of block selection on an input image 51. Each portion indicated by a dotted rectangle indicates one unit of an object as a result of the analysis of an image. The type of an attribute provided to each object indicates a result of determination by block selection processing.

Returning to the description of the flow chart of Fig. 4, in steps S402 through S405, the CPU 205 performs processing required for vectorization on each block obtained by division in step S401.

In step S402, the CPU 205 performs optical character recognition (OCR) processing on a block determined to have a TEXT attribute.

In step S403, the CPU 205 recognizes the size, style, and font type of the text with respect to the OCR-processed text block and performs vectorization processing for converting the text in the input image into visually faithful font data.
Furthermore, in step S403, the CPU 205 performs vectorization processing by performing outline processing on a LINE block, a PICTURE block, and a TABLE block.

In step S404, the CPU 205 performs image processing on a PICTURE block to handle the image data as a separate Joint Photographic Experts Group (JPEG) file.

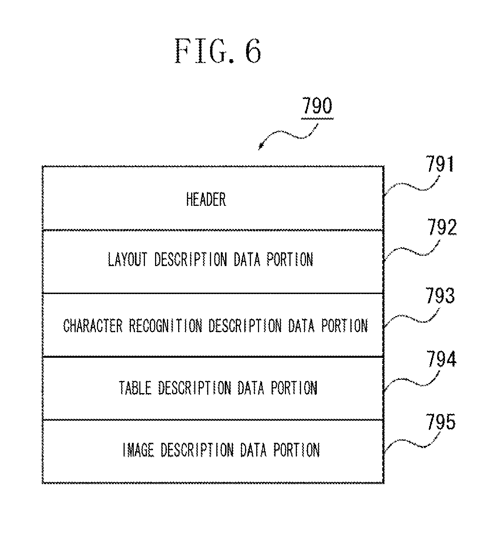

In step S405, the CPU 205 converts into DAOF (Fig. 6) the attribute information and positional information of each block determined in step S401 and the OCR information, font information, vector information, and image information extracted in steps S402 through S404.

Fig. 6 illustrates an exemplary data structure of the DAOF data according to the present exemplary embodiment.

Referring to Fig. 6, DAOF data 790 includes a plurality of data portions.

A header 791 describes information about image data to be processed. A layout description data portion 792 describes attribute information for each block recognized for each attribute, such as TEXT, PICTURE, LINE, PHOTO, and TABLE, in the input image data, and rectangle address (coefficient) information thereof.

A character recognition description data portion 793 describes a result of character recognition obtained as a result of character-recognizing a TEXT block. A table description data portion 794 describes detailed information about a structure of a TABLE block. An image description data portion 795 holds image data obtained by trimming the input image data.

Now, the remote copying processing according to the present exemplary embodiment will be described below.

The remote copying refers to processing in which a scanning operation and printing operation in a conventional copying operation are performed by different apparatuses on a network. For example, in the remote copying processing, the color printer 5 prints out an image of a document read by the color MFP 3.

Meanwhile, local copying refers to an operation for copying in which processing from a scan operation to a printing operation is performed by a single apparatus, just as copying processing is performed by a conventional MFP.

In the case where the local copying cannot be performed because the printer of an MFP is currently performing processing of another job, the remote copying enables another MFP on the network to perform the print operation in substitution for the MFP.

In addition, in the case of distributing a copied output to a user who is present at a remote place, the remote copying function facilitates saving time and trouble required for the distribution by printing out the document by an MFP installed at a place close to the remote user.

In the present exemplary embodiment, an apparatus that performs the scanning operation (usually, an apparatus via which the user generates an instruction for operation related to the remote copying) is referred to as a "local device", and an apparatus that performs printing and outputting is referred to as a "remote device".

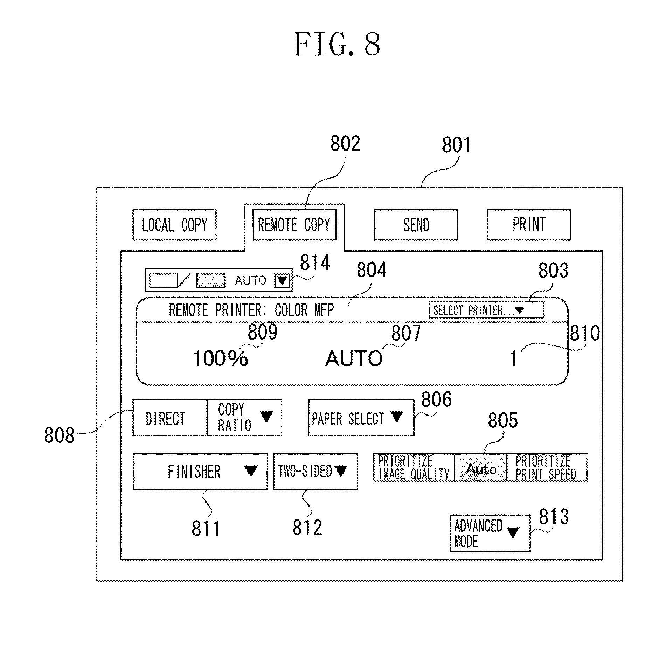

Fig. 8 illustrates an example of a screen displayed on a display unit of the operation unit 210 of a local device when an operator (user) of the local device generates an instruction for remote copying. Referring to Fig. 8, a screen 801 is displayed on the display unit of the operation unit 210 to enable the user to generate an instruction for performing setting for the remote copying and starting the remote copying. The screen 801 is displayed when the user presses a remote copy mode button 802.

When the user presses a printer select button 803, a pull-down menu (not illustrated) is displayed indicating a list of remote devices that can be designated as an output destination of the remote copying. Then, the user selects a desired remote device from among the remote devices in the list. A name of the remote device selected by the user is displayed in a display area 804.

The list of remote devices that can be designated as an output destination in remote copying is held within the apparatus.

Here, the list of remote devices connected to the LAN 10 that can be designated as an output destination in remote copying can be acquired by sending a query to a configuration management server (not illustrated) that manages a list of designatable remote devices. Furthermore, the list of designatable remote devices can be acquired by broadcasting to the LAN 10 a packet for searching for an output apparatus that can perform remote copying and listing the output apparatuses that have responded to the packet.

An output mode selection button 805 enables a user to select an output mode in the case of remote copying. The output mode includes an "image quality priority" mode, an "auto selection" mode, and a "print speed priority" mode. In the example illustrated in Fig. 8, the "auto selection" mode is selected.

The output mode will be described in detail below. The setting for the output mode relates to selection of processing flow in the case of remote copying.

The processing flow is a flow of processing performed in the case of remote copying, including processing for determining whether vectorization processing and color conversion processing are required and whether vectorization/RIP processing and color conversion processing are performed by a local device or a remote device if it is determined that vectorization processing and color conversion processing are required.

When the user selects the "image quality priority" mode, a processing flow that prioritizes improvement of image quality is selected in remote copying. When the user selects the "print speed priority" mode, a processing flow that prioritizes productivity, that is, reduction of the time required until a remote copy of a document is completely output by a remote device, instead of image quality, is selected in remote copying. When the user selects the "auto selection" mode, a processing flow that considers a balance between image quality and processing speed is selected in remote copying.

A copy ratio designation button 808 enables a user to designate a ratio for enlarging or reducing an image to be applied to an image of a document in the case of remote copying.

When the user presses the copy ratio designation button 808, a copy ratio designation screen (not illustrated) is displayed. The user can designate a copy ratio via the copy ratio designation screen. When the user presses a "direct" key of the copy ratio designation button 808, the copy ratio designation screen is not displayed. In this case, the user can designate direct copying, that is, the document is copied at a copy ratio of 100%.

The copy ratio designated by the user is displayed in a display area 809.

A paper select button 806 enables a user to select a paper to be used for printing. When the user presses the paper select button 806, a list of sizes of papers that can be selected as a print paper is displayed.

The paper size selected for printing is displayed in a display area 807. In the example illustrated in Fig. 8, the "auto selection" mode is selected. In this state, an optimum output paper is automatically selected by detecting a document size during scanning of the document and considering the copy ratio designated by the user.

A display area 810 displays the number of copies to be made in remote copying. The number of copies can be set by the user by operating a hard key (not illustrated).

A finishing setting button 811 enables a user to perform a setting for a finisher. When the user presses the finishing setting button 811, a finisher setting screen (not illustrated) is displayed. The user can perform various settings for finishing, such as sorting, stapling, and punching, to be performed on printed paper sheets.

A two-sided printing designation button 812 enables a user to designate two-sided copying (printing). When the user presses the two-sided printing designation button 812, a two-sided printing setting screen (not illustrated) is displayed. The user can perform a setting as to in which of a two-sided printing mode and a one-sided printing mode a document is to be copied (printed) and a setting as to a direction of binding in the case of the two-sided printing mode, via the two-sided printing setting screen.

An advanced mode setting button 813 enables a user to set an advanced mode (mode for using an advanced function). When the user presses the advanced mode setting button 813, the user can set an advanced mode using an advanced function of an MFP, such as a "series copying" function, a "bookbinding" function, and a "reduced layout" function.

A color mode setting button 814 enables a user to set a color mode. When the user presses the color mode setting button 814, a list of color modes, namely, a "color copy" mode, a "monochromatic copy" mode, and an "auto selection" mode, is displayed. The user can select a desired color mode from among the above-described listed color modes.

When the user selects either the "color copy" mode or the "monochromatic copy" mode, the document is printed out in the selected color mode. When the user selects the "auto selection" mode, during scanning of a document, the local device automatically determines whether the scanned document is a color document or a monochromatic document. If it is determined that the scanned document is a color document, the remote device prints the document in the color copy mode. On the other hand, if it is determined that the scanned document is a monochromatic document, the remote device prints the document in the monochromatic copy mode.

Here, if the remote device selected by the user via the printer select button 803 is a monochromatic MFP, the user can select only the monochromatic copy mode via the color mode setting button 814. Furthermore, if the remote device is a color MFP but the local device is a monochromatic MFP, the user can select only the monochromatic copy mode via the color mode setting button 814. Moreover, if the local device is a monochromatic MFP but has a color scanner and if the remote device is a color MFP, the user can select the color copy mode, the monochromatic copy mode, or the auto selection mode.

In the remote copying according to the present exemplary embodiment, the local device can send to the remote device bitmap (raster) image data or vectorized data obtained by vectorizing bitmap image data.

Furthermore, in the remote copying according to the present exemplary embodiment, the local device can send, to the remote device, an image input via the local device after converting the input image into device-independent color space data (standard color space data, such as Lab data, for example) .

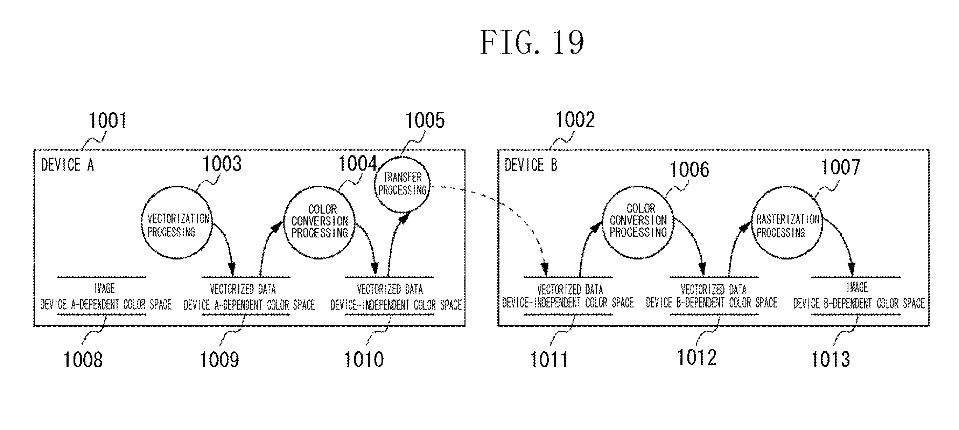

Fig. 19 is a data flow diagram illustrating a data path for the remote copying according to the present exemplary embodiment in the case where the local device converts vectorized data into standard color space data and sends the converted data to the remote device.

Referring to Fig. 19, an image input device A (hereinafter referred to as a "device A") 1001 and an image output device B (hereinafter referred to as a "device B") 1002 are in communication with each other via a network. The device A 1001 is a local device, and the device B 1002 is a remote device.

Now, a case where remote copying according to the present exemplary embodiment is performed, in which the device A 1001 scans a color document to generate color image data and the device B 1002 outputs an image based on the color image data sent from the device A 1001, will be described below.

The device A 1001 performs processing 1003, 1004, and 1005 on image data. The device B 1002 performs processing 1006 and 1007 on image data.

Image data states 1008 through 1013 each indicate a state of image data that has been subjected to each of the processing 1003 through 1007. In the example illustrated in Fig. 19, each of the states 1008 through 1013 is indicated as "data format, color space of data". In the state 1008 (bitmap image, device A-dependent color space), the format of the image data is bitmap, and the color space of the image data is a device A 1001-dependent color space.

In the example illustrated in Fig. 19, in the state 1008 (bitmap image, device A-dependent color space), the image input by the device A 1001 is stored. The state 1008 (bitmap image, device A-dependent color space) corresponds to a state of image data after being read by a scanner of the device A 1001.

The input image in the state 1008 is converted into the state 1009 (vectorized data, device A-dependent color space) by the vectorization processing 1003.

The data in the state 1009 is then subjected to the color conversion processing 1004 to be converted into the state 1010 (vectorized data, device-independent color space). The data in the state 1010 is then subjected to the data transfer processing 1005 to be transferred to the device B 1002 via the network.

Then, the device B 1002 stores the data transferred from the device A 1001, as indicated as the state 1011 (vectorized data, device-independent color space). Then, the device B 1002 performs the color conversion processing 1006 on the data transferred from the device A 1001 to convert the data into the data indicated as the state 1012 (vectorized data, device B-dependent color space).

The data in the state 1012 is then subjected to the rasterization processing 1007 to be converted into the data illustrated as the state 1013 (bitmap image, device B-dependent color space). The device B 1002 prints the converted data illustrated as the state 1013.

As described above, the present exemplary embodiment introduces the method of color matching into the method of remote copying. Accordingly, variation in the color tint of a print product (output product) can be reduced to a minimum.

As described above, the device A 1001 transfers vectorized data and the device B 1002 converts the transferred data into a bitmap image. Thus, the present exemplary embodiment does not require processing for converting a resolution of a bitmap image. Accordingly, the degradation of image quality occurring due to conversion of a resolution can be reduced. In particular, even in the case where the resolution of the device B 1002 is higher than the resolution of the device A 1001, the degradation of image quality can be reduced.

In addition, in the present exemplary embodiment, the device A 1001 transfers vectorized data, which is smaller than bitmap image data in size. Accordingly, in the case of the remote copying, the size of the data transferred from the device A 1001 to the device B 1002 via the network can be made appropriately small.

Thus, with the processing according to the above-described data path, a user can obtain a high quality print product (output product) whose data size is small, regardless of the type of the input/output devices.

However, the above-described vectorization processing and the processing for converting image data into a standard color space are not required in all remote copying occasions. That is, for example, in the case where a user instructs remote copying that prioritizes productivity, the above-described vectorization processing and color conversion processing are not required. Moreover, in the case of remote copying of a monochromatic image, it is not required to convert the image into a standard color space.

In addition, in the case of processing that requires vectorization, rasterization, and/or color conversion, if the capacity of a local device and that of a remote device differ from each other, the processing time required in the case of performing such processing with the local device differs from that required in the case of performing the same processing with the remote device. Accordingly, in order to perform remote copying with a sufficient level of productivity, it is necessary to optimally determine which device is to perform which processing.

Now, an example will be described below in which in performing remote copying, a determination is optimally made as to whether vectorization and color conversion are required and which device is to perform which of vectorization, rasterization, and color conversion, according to a content of a user setting for remote copying.

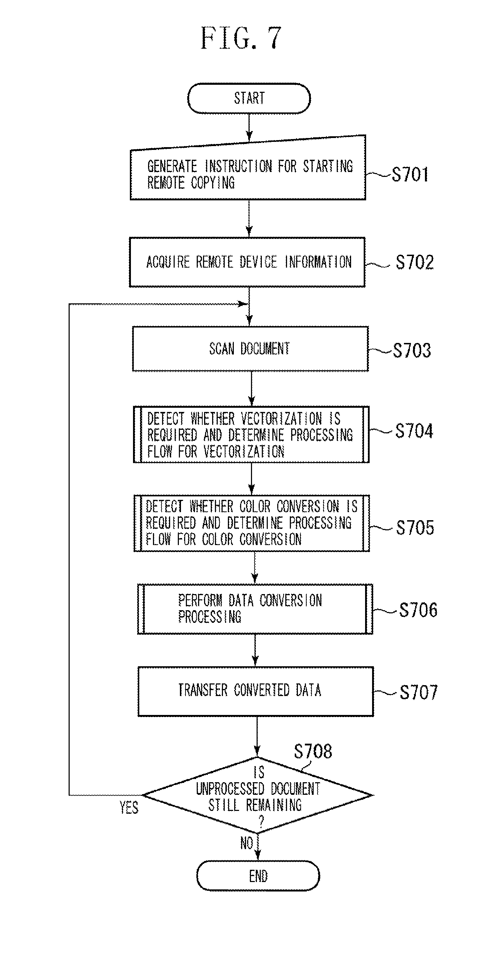

Fig. 7 is a flow chart illustrating processing performed by a local device in the case of remote copying according to the present exemplary embodiment. The processing illustrated in the flow chart of Fig. 7 is performed by the CPU 205 of the control unit 200 or by a specific unit in the control unit 200 under the control of the CPU 205.

Referring to Fig. 7, in step S701, when an operator (user) places a document on a document table of the scanner 201 of the color MFP 3 or the monochromatic MFP 6 and generates an instruction for starting remote copying via the operation unit 210, the control unit 200 receives the user instruction.

More specifically, when the user performs various settings (including a designation for a remote device to be used) in order to start remote copying via the screen (Fig. 8) and presses a "copy start" button (hard key) (not illustrated), the UI processing module 303 notifies the job control processing module 301 of the contents of the user settings and that the user has generated an instruction for starting the remote copying. The job control processing module 301 receives the notification from the UI processing module 303 and then starts processing for the remote copying in step S702.

In step S702, the job control processing module 301 sends to the device information acquisition processing module 306 information describing the remote device designated by the user in step S701 and acquires device information about the designated remote device.

At this time, the device information acquisition processing module 306 sends a request for sending device information to the designated remote device and waits until the remote device sends its device information. When the device information acquisition processing module 306 receives the device information from the designated remote device, the device information acquisition processing module 306 sends the received device information to the job control processing module 301.

After receiving the device information about the designated remote device from the device information acquisition processing module 306, then the processing advances to step S703.

If the job control processing module 301 has previously performed a remote copy operation using the same remote device, for example, and thus has already acquired the device information about the remote device and stored the acquired device information on the HDD 208, it is not required for the job control processing module 301 to generate a request for sending device information in step S702. In this case, the job control processing module 301 can use the device information stored on the HDD 208, instead of generating such a request.

In step S703, the job control processing module 301 generates a scan instruction to the scan processing module 310 to scan one sheet of the documents set on the scanner 201, so that the read document image is input to the local device. The input image and color information sent from the scan processing module 310 are stored in a buffer area on the RAM 206. Then the processing advances to step S704.

In step S704, the CPU 205 determines whether vectorization processing is required. Then, the CPU 205 determines a processing flow for the vectorization processing. Here, the determination of the processing flow for the vectorization processing refers to determining whether the vectorization is to be performed by the local device or the remote device. The CPU 205 then advances to step S705

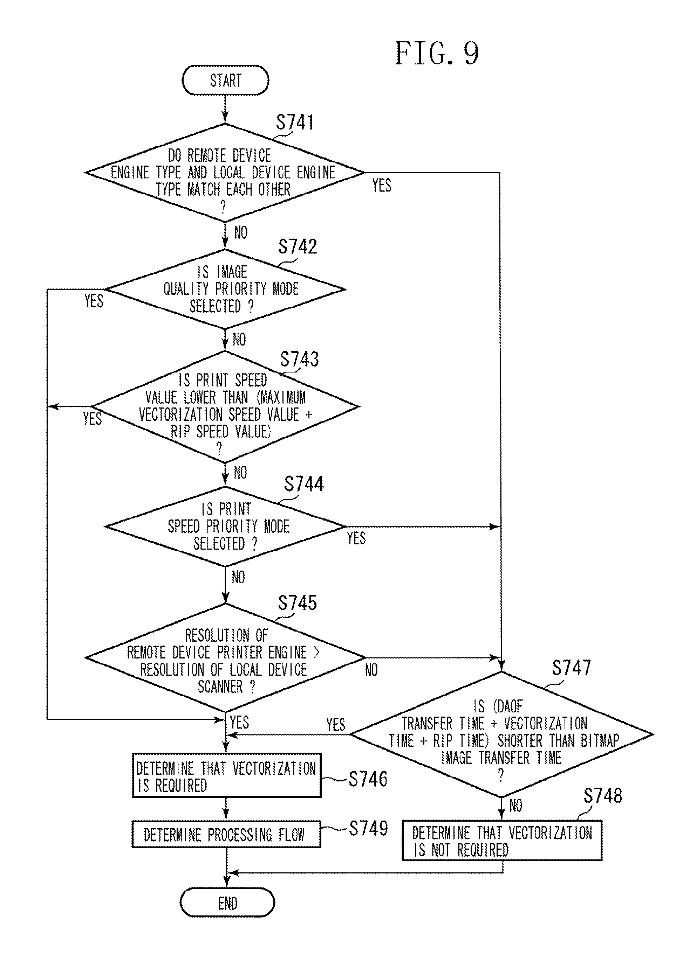

The processing performed in step S704 will be described in more detail below with reference to a flow chart illustrated in Fig. 9.

Referring to Fig. 9, in step S741, the CPU 205 determines whether a type of the engine of the remote device and that of the local device match each other. If it is determined in step S741 that the remote device engine type and the local device engine type match each other (YES in step S741), then the CPU 205 advances to step S747.

On the other hand, if it is determined in step S741 that the remote device engine type and the local device engine type do not match each other (No in step S741), then the CPU 205 advances to step S742.

The information about the engine type includes information about the print speed, print resolution, and whether the device can perform both color printing and monochromatic printing or monochromatic printing only, as described above with reference to Fig. 1. In determining whether the remote device engine type and the local device engine type match in step S741, the CPU 205 particularly checks the print resolution of the printer unit of the remote device.

If the engine type of the remote device is the same as that of the local device, the remote device, in remote copying, can print the image with an image quality as high as that in the case of a local copy operation.

The determination as to the engine types in step S741 is performed because in the case of remote copying using local and remote devices of the same engine type, the image quality neither improves or degrades even if the image is vectorized.

In step S742, the CPU 205 determines the output mode in the remote copy set by the user. If it is determines in step S742 that the "image quality priority" mode is set, then the CPU 205 advances to step S746. On the other hand, if it is determined in step S742 that the "auto selection" mode or the "print speed priority" mode is set, then the CPU 205 advances to step S743.

In step S743, the CPU 205 determines whether the print speed of the remote device printer engine is lower than the "maximum vectorization speed plus RIP speed". If it is determined in step S743 that the print speed of the remote device printer engine is lower than the "maximum vectorization speed plus RIP speed" (YES in step S743), then the CPU 205 advances to step S746. In step S746, the CPU 205 determines that vectorization is required. On the other hand, if it is determined in step S743 that the print speed of the remote device printer engine is equal to or higher than the "maximum vectorization speed plus RIP speed" (NO in step S743), then the CPU 205 advances to step S744.

The "maximum vectorization speed plus RIP speed" will be described below.

The "maximum vectorization speed plus RIP speed" indicates an available maximum processing speed (the number of pages processed per minute) in the case of performing vectorization and RIP processing during remote copying. The "maximum vectorization speed plus RIP speed" is calculated according to the "minimum vectorization time plus RIP time".

Here, the "minimum vectorization time plus RIP time" is a smallest value of the values for the following three processing patterns (A-1) through (A-3).
(A-1): (time required for processing with the vectorization processing module 308 of the local device) + (time required for transferring DAOF data) + (time required for RIP processing on the DAOF data by the remote device).
(A-2): (time required for processing with the vectorization processing module 308 of the local device) + (time required for RIP processing on the DAOF data with the RIP processing module 311 of the local device) + (time required for transferring the bitmap image obtained as a result of the RIP processing).
(A-3): (time required for transferring the input bitmap image) + (time required for vectorization by the remote device) + (time required for RIP processing by the remote device).

The "maximum vectorization speed plus RIP speed" is obtained by calculating the number of pages that can be processed per minute according to the smallest value obtained as described above.

Furthermore, the data transfer time can be calculated as follows. First, data as large as 100 bytes is transferred from the local device to the remote device to detect a data transfer rate.

Subsequently, the size of DAOF data is divided by the detected data transfer rate. In the same way, the data size of the input image is divided by the detected data transfer rate. Thus, the DAOF data transfer time and the input image transfer time can be calculated. Here, the size of the image that has been subjected to the RIP processing is as large as the input image. That is, the data size of the input image can be regarded substantially the same as the data size of the compressed image, and thus can be substituted therewith.

The size of the DAOF data can be calculated by multiplying the size of the input image by a predetermined ratio. The calculation of the data transfer time can be performed during the processing in step S743. Alternatively, the data transfer time can be separately and previously calculated at a predetermined time. In this case, the previously calculated transfer time for each remote device can be held on the HDD 208.

As described above, in step S743, the CPU 205 determines that vectorization is required if it is determined in step S743 that the "maximum vectorization speed plus RIP speed" is higher than the print speed of the remote device printer engine.

This determination is made because the printing can be performed at the print speed of the remote device printer engine, which does not affect the productivity in remote copying.

Explicitly, as described above, even in the case where the user has not selected the "image quality priority" mode, if the CPU 205 determines that sufficiently high productivity of the remote copying can be maintained, the CPU 205 determines to perform vectorization. Thus, an output having a highest possible image quality can be obtained without affecting the productivity of remote copying.

In step S744, the CPU 205 further determines which mode has been selected by the user for the output mode. If it is determined in step S744 that the "print speed priority" mode has been selected (YES in step S744), then the CPU 205 advances to step S747. On the other hand, if it is determined in step S744 that the "auto selection" mode has been selected (NO in step S744, then the CPU 205 advances to step S745.

In step S745, the CPU 205 compares the resolution of the remote device printer engine with the resolution of the local device scanner based on the device information of the remote device obtained in step S702. If it is determined in step S745 that the resolution of the local device scanner is equal to or higher than the resolution of the remote device printer engine (NO in step S745), then the CPU 205 advances to step S747. On the other hand, if it is determined in step S745 that the resolution of the remote device printer engine is higher than the resolution of the local device scanner (YES in step S745), then the CPU 205 advances to step S746. In step S746, the CPU 205 determines that vectorization is required, and then the processing ends.

When the resolution of a bitmap image is converted, the image quality usually degrades. Furthermore, conversion to a higher resolution usually causes a greater degradation of image quality than in the case of conversion to a lower resolution.

The determination in step S745 is performed because in the case where the resolution of the remote device printer engine is higher than the resolution of the local device scanner, vectorization can improve the image quality of the print product.

More specifically, the degradation of image quality, which may occur due to converting the resolution of a bitmap image to a higher resolution, can be reduced by converting the image into vectorized data, which does not depend on the resolution of the local device scanner. Thus, an output having a high image quality can be obtained.

Meanwhile, as described above, the present exemplary embodiment does not perform vectorization if it is determined in step S745 that the resolution of the remote device printer engine is equal to or lower than the resolution of the local device scanner. This is because an output having a high image quality can be obtained by converting the resolution of a bitmap image while simply thinning the bitmap image without performing vectorization.

When the user has designated the "print speed priority" mode in step S744, even if it is determined that the resolution of the remote device printer engine is higher than the resolution of the local device scanner, the CPU 205 does not perform vectorization. In this case, the image quality is lower than that in the case of performing vectorization. However, the print speed in the remote copying is higher than that in the case of performing vectorization.

In step S747, the CPU 205 determines whether the sum of "(time required for processing with the vectorization processing module 308 of the local device) + (time required for transferring DAOF data) + (time required for RIP processing on the DAOF data by the remote device)" is shorter than the time required for transferring the bitmap image without vectorization to the remote device.

If it is determined in step S747 that the time required for transferring the bitmap image is longer than the sum of "(time required for processing with the vectorization processing module 308 of the local device) + (time required for transferring DAOF data) + (time required for RIP processing on the DAOF data by the remote device)" (YES in step S747), then the CPU 205 advances to step S746. On the other hand, if it is determined in step S747 that the time required for transferring the bitmap image is equal to or shorter than the sum of "(time required for processing with the vectorization processing module 308 of the local device) + (time required for transferring DAOF data) + (time required for RIP processing on the DAOF data by the remote device)" (NO in step S747), then the CPU 205 advances to step S748. In step S748, the CPU 205 determines that vectorization is not required, and then the processing ends.

In step S746, the CPU 205 determines that vectorization is required. Then, the CPU 205 advances to step S749.

In step S749, the CPU 205 determines a processing flow for vectorization whose processing time is equivalent to the "minimum vectorization time plus RIP time", and then the processing ends.

If the time required in the case of the processing pattern (A-1) is the shortest of the above-described three processing patterns, then the CPU 205 selects a processing flow for vectorization in which vectorization is to be performed by the local device, then DAOF data is transferred from the local device to the remote device, and the remote device performs RIP processing on the received DAOF data.

If the time required in the case of the processing pattern (A-2) is the shortest of the above-described three processing patterns, then the CPU 205 selects a processing flow for vectorization in which vectorization and RIP processing are to be performed by the local device.

If the time required in the case of the processing pattern (A-3) is the shortest of the above-described three processing patterns, then the CPU 205 selects a processing flow for vectorization in which vectorization and RIP processing are to be performed by the remote device.

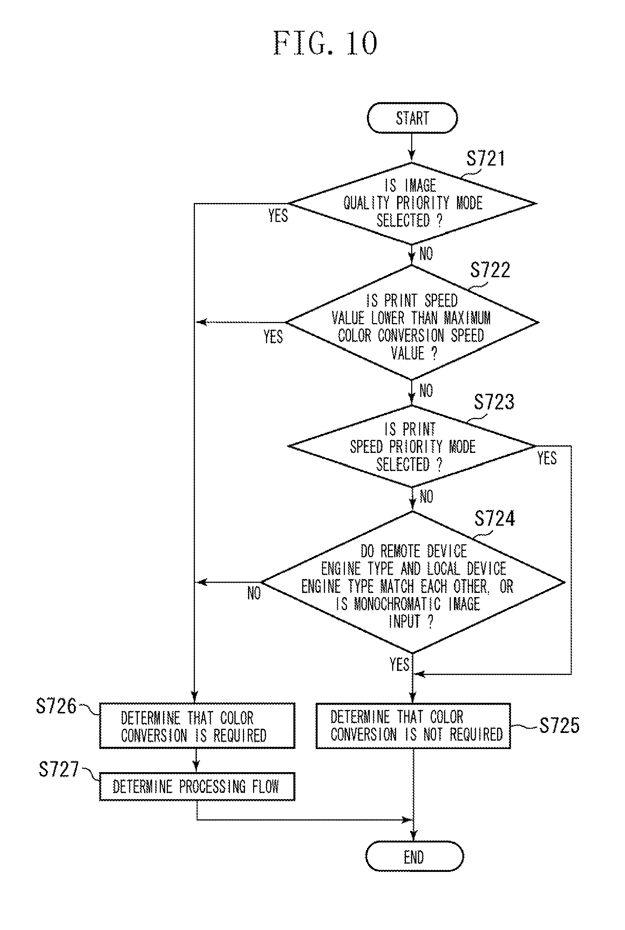

Returning to the description of the processing according to the flow chart of Fig. 7, in step S705, the CPU 205 determines whether color conversion is required. If it is determined in step S705 that color conversion is required, then the CPU 205 determines a processing flow for color conversion. The processing for determining a color conversion processing flow will be described below with reference to the flow chart of Fig. 10.

Fig. 10 is a flow chart illustrating detailed operations performed during processing in step S705 (Fig. 7).

Referring to Fig. 10, in step S721, the CPU 205 determines which mode has been selected by the user for the output mode. If it is determined in step S721 that the user has selected the "image quality priority" mode (YES in step S721), then the CPU 205 advances to step S726. On the other hand, if it is determined in step S721 that the user has selected the "auto selection" mode or the "print speed priority" mode (NO in step S721), then the CPU 205 advances to step S722.

In step S722, the CPU 205 determines whether the print speed of the remote device printer engine is lower than a "maximum color conversion speed". If it is determined in step S722 that the print speed of the remote device printer engine is lower than the "maximum color conversion speed" (YES in step S722), then the CPU 205 advances to step S726. On the other hand, if it is determined in step S722 that the print speed of the remote device printer engine is equal to or higher than the "maximum color conversion speed" (NO in step S722), then the CPU 205 advances to step S723.

The print speed of the remote device refers to the speed of the printer engine included in the device information received from the remote device in step S702. The "maximum color conversion speed" is calculated according to a "minimum color conversion processing time". The "minimum color conversion processing time" can be calculated in the following manner according the determination as to whether vectorization is required and the determined processing flow for vectorization determined in step S704.

In the case where vectorization is determined not to be required, the "minimum color conversion processing time" is the shortest time period of the time periods for the following three processing patterns (B-1) through (B-3).
(B-1): time required for color conversion by the local device on an input image with the color conversion processing module 309 using an input profile and an output profile.
(B-2): time required for color conversion by the remote device on an input image using an input profile and an output profile.
(B-3): (time required for color conversion by the local device on an input image using an input profile only) + (time required for color conversion by the remote device on an input image using an output profile only).

Furthermore, in the case where the local device performs vectorization and the remote device performs RIP processing, the "minimum color conversion processing time" is the shortest time period of the time periods for the following three processing patterns (C-1) through (C-3).
(C-1): time required for color conversion by the local device on DAOF data with the color conversion processing module 309 using an input profile and an output profile.
(C-2): time required for color conversion by the remote device on DAOF data using an input profile and an output profile.
(C-3): (time required for color conversion by the local device on DAOF data using an input profile only) + (time required for color conversion by the remote device on DAOF data using an output profile only).

Moreover, in the case where the local device performs both vectorization and RIP processing, the "minimum color conversion processing time" is the shortest time period of the time periods for the following three processing patterns (D-1) through (D-3).
(D-1): time required for color conversion by the local device on DAOF data with the color conversion processing module 309 using an input profile and an output profile.
(D-2): time required for color conversion by the remote device on an RIP-processed image using an input profile and an output profile.
(D-3): (time required for color conversion by the local device on DAOF data using an input profile only) + (time required for color conversion by the remote device on an RIP-processed image using an output profile only).

In addition, in the case where the remote device performs both vectorization and RIP processing, the "minimum color conversion processing time" is the shortest time period of the time periods for the following three processing patterns (E-1) through (E-3).
(E-1): time required for color conversion by the local device on an input image with the color conversion processing module 309 using an input profile and an output profile.
(E-2): time required for color conversion by the remote device on DAOF data using an input profile and an output profile.
(E-3): (time required for color conversion by the local device on an input image using an input profile only) + (time required for color conversion by the remote device on DAOF data using an output profile only).

The "maximum color conversion speed" is calculated according to the number of pages that can be processed per unit time (for example, one minute) that is calculated according to the calculated "minimum color conversion processing time".

The determination in step S722 is performed because if the print speed of the remote device printer engine is lower than the "maximum color conversion speed", the productivity in remote copying is not affected even when color conversion is performed.

In step S723, the CPU 205 further determines which mode has been selected by the user for the output mode. If it is determined in step S723 that the "print speed priority" mode has been selected (YES in step S723), then the CPU 205 advances to step S725. In step S725, the CPU 205 determines that color conversion is not required, and then the processing ends. On the other hand, if it is determined in step S723 that the "auto selection" mode has been selected (NO in step S723), then the CPU 205 advances to step S724.

The determination in step S725 is performed because if the "print speed priority" mode is selected for the output mode, the productivity in remote copying can be improved without color conversion. However, the color tint of the product printed by the local device and that of the product printed by the remote device may differ in this case.

In step S724, the CPU 205 determines whether the type of the engine of the remote device and that of the local device match each other and checks color information of the input image obtained in step S703.

If it is determined in step S724 that the remote device engine type and the local device engine type match each other (YES in step S724) or if it is determined that a monochromatic image is input, then the CPU 205 advances to step S725. In step S725, the CPU 205 determines that color conversion is not necessary, and then the processing ends.

Information about the remote device engine type is included in the device information received from the remote device in step S702.

If it is determined in step S724 that the remote device engine type and the local device engine type do not match each other (NO in step S724) and that a color image is input, then the CPU 205 advances to step S726.

If the remote device engine type and the local device engine type are the same, color reproduction characteristics of the remote and local devices are at substantially the same levels. Accordingly, the determination in step S724 is performed because the color tint of the product printed by the local device and that of the product printed by the remote device may not greatly differ without color conversion. Furthermore, the determination in step S724 is performed because in the case where the output mode is set to monochromatic printing, it is not required to match the color tints of the products printed by the local device and the remote device, or because color conversion for matching the color tints may not be effective in this case.

In step S726, the CPU 205 determines that color conversion is required. Then, the CPU 205 advances to step S727.

In step S727, the CPU 205 determines a processing flow for color conversion, and then the processing ends. The processing flow for color conversion is determined according to the determination as to whether vectorization is required and the processing flow for vectorization determined in step S704.

That is, if it is determined that vectorization is not required, the processing flow for color conversion is determined in the following manner.

If the time required in the case of the above-described processing pattern (B-1) is the minimum color conversion processing time, the CPU 205 determines to use a processing flow B1 described below.
Processing flow B1: "the local device converts the color space of the input image from a local device-dependent color space into a remote device-dependent color space".

If the time required in the case of the above-described processing pattern (B-2) is the minimum color conversion processing time, the CPU 205 determines to use a processing flow B2 described below.
Processing flow B2: "the remote device converts the color space of the transferred image from a local device-dependent color space into a remote device-dependent color space".

If the time required in the case of the above-described processing pattern (B-3) is the minimum color conversion processing time, the CPU 205 determines to use a processing flow B3 described below.
Processing flow B3: "the local device converts the color space of the input image from a local device-dependent color space into a device-independent color space and the remote device converts the color space of the transferred image from the device-independent color space into a remote device-dependent color space".

Furthermore, in the case where the local device performs vectorization and the remote device performs RIP processing, the processing flow for color conversion is determined in the following manner.

If the time required in the case of the above-described processing pattern (C-1) is the minimum color conversion processing time, the CPU 205 determines to use a processing flow C1 described below.
Processing flow C1: "the local device converts the color space of the DAOF data generated by vectorization from a local device-dependent color space into a remote device-dependent color space".

If the time required in the case of the above-described processing pattern (C-2) is the minimum color conversion processing time, the CPU 205 determines to use a processing flow C2 described below.
Processing flow C2: "the remote device converts the color space of the transferred DAOF data from a local device-dependent color space into a remote device-dependent color space".

If the time required in the case of the above-described processing pattern (C-3) is the minimum color conversion processing time, the CPU 205 determines to use a processing flow C3 described below.
Processing flow C3: "the local device converts the color space of the DAOF data generated by vectorization from a local device-dependent color space into a Lab color space and the remote device converts the color space of the transferred DAOF data from the Lab color space into a remote device-dependent color space".

Moreover, in the case where the local device performs vectorization and RIP processing, the processing flow for color conversion is determined in the following manner.

If the time required in the case of the above-described processing pattern (D-1) is the minimum color conversion processing time, the CPU 205 determines to use a processing flow D1 described below.
Processing flow D1: "the local device converts the color space of the DAOF data generated by vectorization from a local device-dependent color space into a remote device-dependent color space".

If the time required in the case of the above-described processing pattern (D-2) is the minimum color conversion processing time, the CPU 205 determines to use a processing flow D2 described below.
Processing flow D2: "the remote device converts the color space of the transferred RIP-processed image from a local device-dependent color space into a remote device-dependent color space".

If the time required in the case of the above-described processing pattern (D-3) is the minimum color conversion processing time, the CPU 205 determines to use a processing flow D3 described below.
Processing flow D3: "the local device converts the color space of the DAOF data generated by vectorization from a local device-dependent color space into a Lab color space and the remote device converts the color space of the transferred RIP-processed image from the Lab color space into a remote device-dependent color space".

In addition, in the case where the remote device performs vectorization and RIP processing, the processing flow for color conversion is determined in the following manner.

If the time required in the case of the above-described processing pattern (E-1) is the minimum color conversion processing time, the CPU 205 determines to use a processing flow E1 described below.
Processing flow E1: "the local device converts the color space of an input image from a local device-dependent color space into a remote device-dependent color space".

If the time required in the case of the above-described processing pattern (E-2) is the minimum color conversion processing time, the CPU 205 determines to use a processing flow E2 described below.
Processing flow E2: "the remote device converts the color space of DAOF data generated by vectorization from a local device-dependent color space into a remote device-dependent color space".

If the time required in the case of the above-described processing pattern (E-3) is the minimum color conversion processing time, the CPU 205 determines to use a processing flow E3 described below.
Processing flow E3: "the local device converts the color space of the input image from a local device-dependent color space into a Lab color space and the remote device converts the color space of the DAOF data generated by vectorization from the Lab color space into a remote device-dependent color space".

Referring back to Fig. 7, in step S706, the CPU 205 performs data conversion processing for remote copying according to the result of determination as to whether vectorization is required and the processing flow for vectorization determined in step S704 and also according to the result of determination as to whether color conversion is required and the processing flow for color conversion determined in step S705.

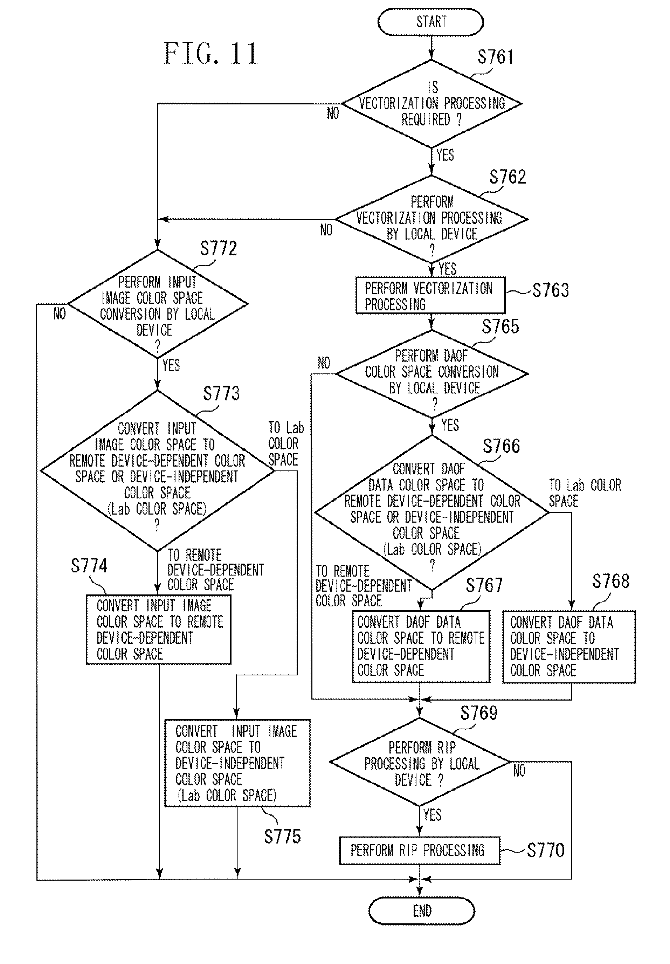

The data conversion processing in step S706 will be described in detail below with reference to Fig. 11.

Referring to Fig. 11, in step S761, if it is determined that vectorization is required in step S704 (YES in step S761), then the CPU 205 advances to step S762. On the other hand, if it is determined that vectorization is not required (NO in step S761), the CPU 205 advances to step S772.

In step S762, the CPU 205 determines whether it is determined that the local device performs vectorization. If it is determined in step S762 that the local device performs vectorization (YES in step S762), then the CPU 205 advances to step S763. On the other hand, if it is determined in step S762 that the CPU 205 does not perform vectorization (NO in step S762), then the CPU 205 advances to step S772.

In step S763, the job control processing module 301 sends the input image to the vectorization processing module 308 to vectorize the input image with the vectorization processing module 308. The vectorization processing module 308 sends the result of vectorization to the job control processing module 301 as DAOF data. When the job control processing module 301 receives the DAOF data from the vectorization processing module 308, then the CPU 205 advances to step S765.

In step S765, the CPU 205 determines whether the color space of the DAOF data is to be converted by the local device according to the determined processing flow for color conversion. If it is determined in step S765 that the DAOF data color space is to be converted by the local device (YES in step S765), then the CPU 205 advances to step S766. On the other hand, if it is determined in step S765 that the DAOF data color space is not to be converted (NO in step S765), then the CPU 205 advances to step S769.

In step S766, the CPU 205 determines to which of the remote device-dependent color space and the device-independent color space (for example, the Lab color space) the color space of the DAOF data generated in step S763 is to be converted from the local device-dependent color space according to the processing flow for the color conversion. If it is determined in step S766 that the DAOF data color space is to be converted to the remote device-dependent color space, then the CPU 205 advances to step S767. On the other hand, if it is determined in step S766 that the DAOF data color space is to be converted to the device-independent color space, then the CPU 205 advances to step S768.

In step S767, the job control processing module 301 sends to the color conversion processing module 309 the DAOF data generated in step S763, an input profile, and an output profile, and generates a request to the color conversion processing module 309 for converting the DAOF data color space from the local device-dependent color space to the remote device-dependent color space.

When the color conversion is completed, the color conversion processing module 309 sends the color-converted DAOF data to the job control processing module 301. When the job control processing module 301 receives the color-converted DAOF data, the CPU 205 advances to step S769.

In step S768, the job control processing module 301 sends to the color conversion processing module 309 the DAOF data generated in step S763 and the input profile, and generates a request to the color conversion processing module 309 for converting the DAOF data color space from the local device-dependent color space to the device-independent color space.

When the color conversion is completed, the color conversion processing module 309 sends the color-converted DAOF data to the job control processing module 301. When the job control processing module 301 receives the color-converted DAOF data, the CPU 205 advances to step S769.

In step S769, the CPU 205 determines whether the local device performs RIP processing according to the processing flow for vectorization. If it is determined in step S769 that the local device performs RIP processing (YES in step S769), then the CPU 205 advances to step S770. On the other hand, if it is determined in step S769 that the local device does not perform RIP processing (NO in step S769), then the CPU 205 ends the processing.

In step S770, the job control processing module 301 sends the DAOF data to the RIP processing module 311 to rasterize the DAOF data into a bitmap image with the RIP processing module 311.

When rasterization is completed, the RIP processing module 311 compresses the rasterized image and then sends the compressed image to the job control processing module 301. When the job control processing module 301 receives the compressed rasterized image, the data conversion processing ends.

In step S772, the CPU 205 determines whether the local device is to perform color conversion on the input image according to the processing flow for color conversion. If it is determined in step S772 that the local device performs color conversion (YES in step S772), then the CPU 205 advances to step S773. On the other hand, if it is determined in step S772 that the local device does not perform color conversion (NO in step S772), then the CPU 205 ends the processing.

In step S773, the CPU 205 determines to which of the remote device-dependent color space and the device-independent color space the color space of the input image is to be converted from the local device-dependent color space according to the processing flow for the color conversion. If it is determined in step S 773 that the input image color space is to be converted to the remote device-dependent color space, then the CPU 205 advances to step S774. On the other hand, if it is determined in step S773 that the input image color space is to be converted to the device-independent color space, then the CPU 205 advances to step S775.

In step S774, the job control processing module 301 sends the input image and the input and output profiles to the color conversion processing module 309 and requests the color conversion processing module 309 to convert the color space of the input image from the local device-dependent color space to the remote device-dependent color space.

When the color conversion is completed, the color conversion processing module 309 sends the color-converted image to the job control processing module 301. When the job control processing module 301 receives the color-converted image, the data conversion processing ends.

In step S775, the job control processing module 301 sends the input image and the input profile to the color conversion processing module 309, and requests the color conversion processing module 309 to convert the color space of the input image from the local device-dependent color space to the device-independent color space.

When the color conversion is completed, the color conversion processing module 309 sends the color-converted image to the job control processing module 301. When the job control processing module 301 receives the color-converted image, the data conversion processing ends.

When the processing in step S706 ends, the CPU 205 advances to step S707.

Referring back to Fig. 7, in step S707, the job control processing module 301 sends the data converted in step S706 and remote copy information to the remote device via the network processing module 302. Then, the CPU 205 advances to step 5708.

The "remote copy information" includes information about whether vectorization by the remote device is required and the format of sending data (the compressed bitmap image data or DAOF data).

Furthermore, the remote copy information includes various information, such as information about whether color conversion by the remote device is required, sending data color space information, an input profile for conversion from the local device-dependent color space to the device-independent color space, and information about the output paper set by the user via the remote copy setting screen in step S701.

For example, in the remote copying according to the present exemplary embodiment, in the case of performing vectorization by the remote device, the remote copy information includes information indicating that vectorization is required.

In step S708, the job control processing module 301 generates an inquiry to the scan processing module 310 as to whether any unprocessed document exists on the scanner 201.

If it is determined in step S708 that an unprocessed document exists on the scanner 201 (YES in step S708), then the CPU 205 returns to step S703 to perform remote copying on the remaining document. On the other hand, if it is determined in step S708 that no unprocessed document exists on the scanner 201 (NO in step S708), then the CPU 205 ends the processing.

In the processing illustrated in the flow chart of Fig. 7, the CPU 205 performs the determination as to whether vectorization is required (step S704) and whether color conversion is required (step S705) for each page of a plurality of pages of a document. However, the determination in step S704 and step S705 can be applied only to the first page of the plurality of pages of the document.

In this case, the result of determination in step S704 and 705 can be applied also to the second page and subsequent pages of the document.

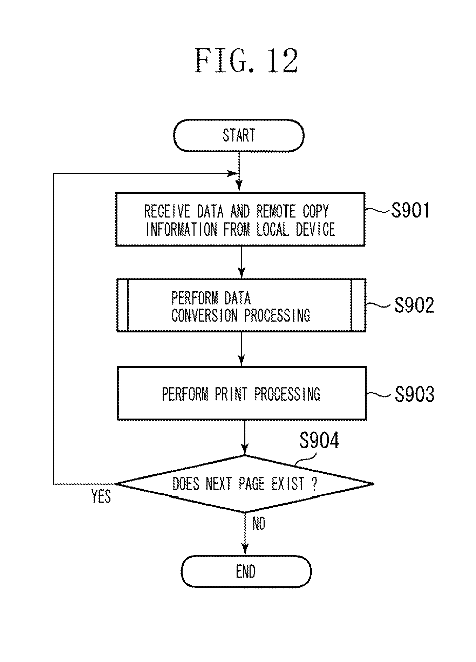

Now, processing for receiving data to be remote-copied, which the remote device performs in remote copying according to the present exemplary embodiment, will be described below with reference to the flow chart of Fig. 12. The processing in the flow chart of Fig. 12 is performed by the CPU 205 of the control unit 200 of the remote device or by a specific unit in the control unit 200 under the control of the CPU 205.

Hereinbelow, just as in the description above, a device that generates a request for performing remote copying (that is, a data sending source device) is referred to as a "local device", and a device that performs the remote copy data receiving processing is referred to as a "remote device".

The remote copy data receiving processing can be performed by any of the color MFP 3, the color printer 4, the color printer 5, or the monochromatic MFP 6 according to the present exemplary embodiment, when designated as the remote device used in the remote copying. When the job control processing module 301 of the color MFP 3, the color printer 4, the color printer 5, or the monochromatic MFP 6 receives data and remote copy information from the device performing the remote copying via the network processing module 302, the CPU 205 starts the remote copy data receiving processing.

Referring to Fig. 12, in step S901, the job control processing module 301 of the remote device receives data corresponding to one page of a document and remote copy information from the local device. Then, the CPU 205 advances to step S902.

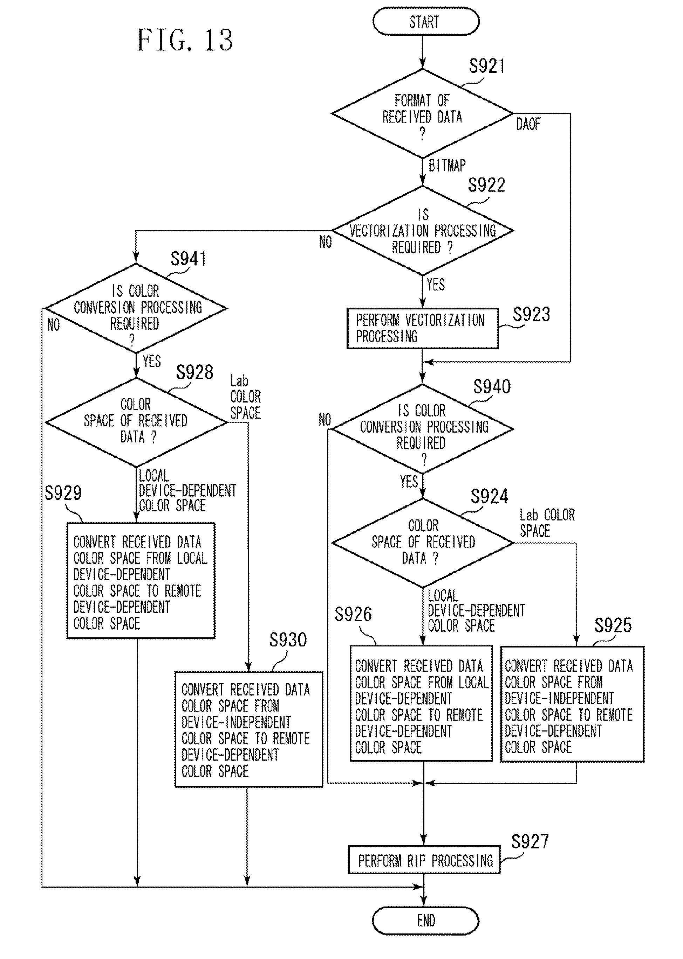

In step S902, the CPU 205 performs data conversion on the received data according to the remote copy information received in step S901. The data conversion processing in step S902 will be described below with reference to the flow chart of Fig. 13.

Fig. 13 is a flow chart illustrating details of the data conversion processing in step S902 (Fig. 12).

Referring to Fig. 13, in step S921, the CPU 205 checks information included in the remote copy information included in the data received from the local device, which indicates a format of the received data. If it is determined in step S921 that the format of the received data is a bitmap image, then the CPU 205 advances to step S922. On the other hand, if it is determined in step S921 that the format of the received data is DAOF data, then the CPU 205 advances to step S940.

In step S922, the CPU 205 checks the information included in the remote copy information as to whether vectorization is required. If it is determined in step S922 that vectorization is required (YES in step S922), then the CPU 205 advances to step S923. On the other hand, if it is determined in step S922 that vectorization is not required (NO in step S922), then the CPU 205 advances to step S941.

In step S923, the job control processing module 301 sends the received image to the vectorization processing module 308 to vectorize the received image with the vectorization processing module 308.

The vectorization processing module 308 sends the result of vectorization to the job control processing module 301 as DAOF data. When the job control processing module 301 receives the DAOF data from the vectorization processing module 308, then the CPU 205 advances to step S940.

In step S940, the CPU 205 checks the information included in the remote copy information as to whether color conversion is required. If it is determined in step S940 that color conversion is required (YES in step S940), then the CPU 205 advances to step S924. On the other hand, if it is determined in step S940 that color conversion is not required (NO in step S940), then the CPU 205 advances to step S927.

In step S924, the CPU 205 checks the information included in the remote copy information as to the color space of the received data. If it is determined in step S924 that the received data color space is the local device-dependent color space, then the CPU 205 advances to step S926. On the other hand, if it is determined in step S924 that the received data color space is the device-independent color space, then the CPU 205 advances to step S925.

In step S926, the job control processing module 301 sends the DAOF data, the input profile, and the output profile to the color conversion processing module 309 and requests the color conversion processing module 309 to convert the DAOF data color space from the local device-dependent color space to the remote device-dependent color space.

When the color conversion is completed, the color conversion processing module 309 sends the color-converted DAOF data to the job control processing module 301. When the job control processing module 301 receives the color-converted DAOF data, then the CPU 205 advances to step S927.

In step S925, the job control processing module 301 sends the DAOF data and the output profile to the color conversion processing module 309 and requests the color conversion processing module 309 to convert the color space of the input image from the device-independent color space to the remote device-dependent color space.

When the color conversion is completed, the color conversion processing module 309 sends the color-converted DAOF data to the job control processing module 301. When the job control processing module 301 receives the color-converted image, the CPU 205 advances to step S927.

In step S927, the job control processing module 301 sends the DAOF data to the RIP processing module 311 and requests the RIP processing module 311 to perform rasterization of the DAOF data into a bitmap image. When the rasterization is completed, the RIP processing module 311 compresses the rasterized image and sends the compressed rasterized image to the job control processing module 301. When the job control processing module 301 receives the compressed rasterized image, the CPU 205 ends the data conversion processing.

On the other hand, if it is determined in step S922 that vectorization is not required (NO in step S922), the CPU 205 advances to step S941.

In step S941, the CPU 205 checks the information included in the remote copy information as to whether color conversion is required. If it is determined in step S941 that color conversion is required (YES in step S941), then the CPU 205 advances to step S928. On the other hand, if it is determined in step S941 that color conversion is not required (NO in step S941), the CPU 205 ends the data conversion processing. Here, if the resolution of the bitmap image differs from the resolution of the remote device printer engine, the CPU 205 performs resolution conversion (not shown).

In step S928, the CPU 205 checks the information included in the remote copy information as to the color space of the received data. If it is determined in step S928 that the received data color space is the local device-dependent color space, then the CPU 205 advances to step S929. On the other hand, if it is determined in step S928 that the received data color space is the device-independent color space, then the CPU 205 advances to step S930.

In step S929, the job control processing module 301 sends the received image, the input profile, and the output profile to the color conversion processing module 309 and requests the color conversion processing module 309 to convert the color space of the received image from the local device-dependent color space to the remote device-dependent color space.

When the color conversion is completed, the color conversion processing module 309 sends the color-converted image to the job control processing module 301. When the job control processing module 301 receives the color-converted image, the CPU 205 ends the data conversion processing.

In step S930, the job control processing module 301 sends the received image and the output profile and requests the color conversion processing module 309 to convert the color space of the input image from the device-independent color space to the remote device-dependent color space.

When the color conversion is completed, the color conversion processing module 309 sends the color-converted image to the job control processing module 301. When the job control processing module 301 receives the color-converted image, the CPU 205 ends the data conversion processing.

Referring back to Fig. 12, when the data conversion in step S902 is completed, the job control processing module 301 advances to step S903.

In step S903, the job control processing module 301 sends to the print processing module 307 the compressed bitmap image data that has been subjected to data conversion in step S902, information about the image data (size, color mode, and resolution), information about the output paper set to the remote device in step S701, and the layout information. Then, the printer engine 202 of the remote device performs printing on the designated paper.

In step S904, the CPU 205 determines whether data for a next page has been received. If it is determined in step S904 that data for a next page has been received (YES in step S904), then the CPU 205 returns to step S901. On the other hand, if it is determined in step S904 that no data for a next page has been received, then the CPU 205 ends the processing.

### <Remote Copy Exemplary Case 1>

Now, an exemplary case of the processing flow for vectorization and color conversion in the case where the user designates the color printer 5 via the color MFP 3 to perform remote printing.

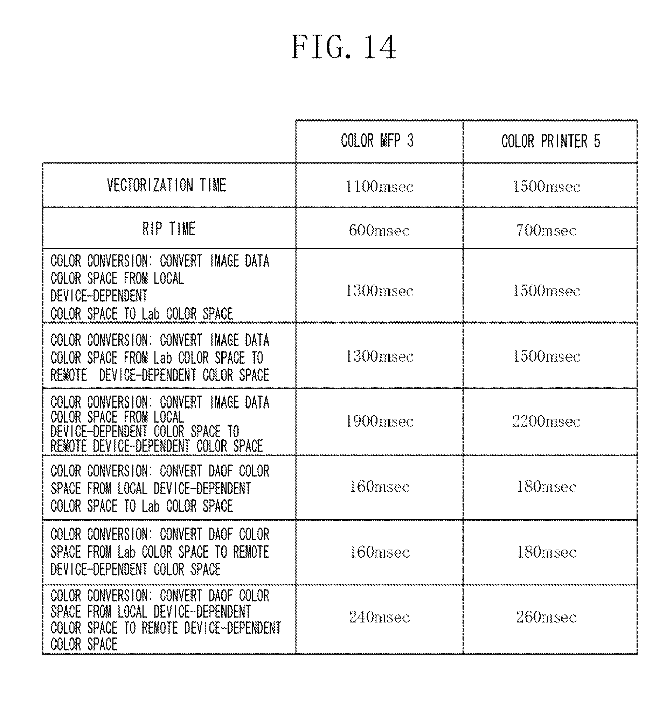

Fig. 14 illustrates exemplary parameter values necessary for determining a processing flow for vectorization and color conversion. Here, it is supposed that the data transfer time is 800 msec in the case of image data and 100 msec in the case of DAOF data.

The processing flow for vectorization is determined in the following manner. Here, the engine type of the color MFP 3 and the engine type of the color printer 5 are the same. Furthermore, a sum of the time required for vectorization by the local device, the time required for transferring the DAOF data, and the time required for RIP processing by the remote device is 1,900 msec. The time required for transferring the compressed bitmap image data is 800 msec. Accordingly, in this case, vectorization is not required regardless of the set output mode.

The processing flow for color conversion is determined according to the output mode in the following manner.

### <When the "Image Quality Priority" Mode Is Set for the Output Mode>

The time required for converting the color space of the input image to the device-independent color space by the local device is 1,300 msec. The time required for converting the color space of the input image from the device-independent color space to the remote device-dependent color space by the remote device is 1,500 msec. The time required for converting the color space of the input image to the remote device-dependent color space by the local device is 1, 900 msec. The time required for converting the color space of the input image to the remote device-dependent color space by the remote device is 2,200 msec.

The time required for converting the color space of the input image to the remote device-dependent color space by the local device is the minimum color conversion processing time in this case. Accordingly, the processing flow for color conversion is set to the processing pattern in which "the local device converts the color space of the input image from the local device-dependent color space to the remote device-dependent color space".

### <When the "Auto Selection" Mode is Set for the Output Mode>

In this case, the maximum color conversion speed is "60/1.9 = 31.578...", which is lower than the print speed. However, because the same type of engine is used, color conversion is not required in this case.

### <When the "Print Speed Priority" Mode Is Set for the Output Mode>

In this case, the maximum color conversion speed is "60/1.9 = 31.578...", which is lower than the print speed.
However, because the print speed priority" mode is set for the output mode, color conversion is not required in this case.

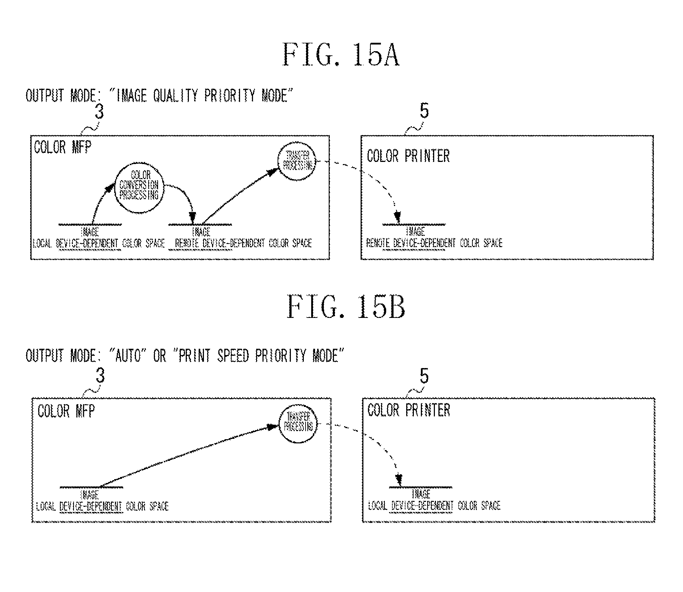

Figs. 15A and 15B each illustrate the processing flow used in the above-described case of remote copying. Fig. 15A illustrates a case where the "image quality priority" mode is set for the output mode. The color space of the image input by the color MFP 3, which is the local device, is then converted into a color printer 5-dependent color space. Then, the color-converted image is transferred to the color printer 5 to be output by the color printer 5.

Fig. 15B illustrates a case where the "auto selection" mode or the "print speed priority" mode is set for the output mode. In this case, neither vectorization nor color conversion is performed on the image input by the color MFP 3, and the input image is directly transferred to the color printer 5 to be printed by the color printer 5.

### <Remote Copy Exemplary Case 2>

Now, a remote copy exemplary case 2, in which the network speed different from that of the remote copy exemplary case 1 is used, will be described below.

The parameter values necessary for determining the processing flow for vectorization and color conversion by each device are set as illustrated in Fig. 14. In the remote copy exemplary case 2, the data transfer time is 2,400 msec in the case of image data and 300 msec in the case of DAOF data.

In the case where the user designates the color printer 5 as the remote device via the color MFP 3, which is the local device, the processing flow for vectorization is determined in the following manner.

Here, the engine type of the color MFP 3 and the engine type of the color printer 5 are the same. Furthermore, a sum of the time required for vectorization by the local device, the time required for transferring the DAOF data, and the time required for RIP processing by the remote device is 2, 100 msec. The time required for transferring the compressed bitmap image data is 2,400 msec. Accordingly, in this case, vectorization is required regardless of the set output mode.

Then, the CPU 205 determines the processing flow for vectorization. Here, the time required in the above-described processing pattern (A-1) is 2,100 msec. The time required in the above-described processing pattern (A-2) is 4,200 msec. The time required in the above-described processing pattern (A-3) is 4,600 msec. Accordingly, the time required in the above-described processing pattern (A-1) is the "minimum vectorization time plus RIP time". Thus, the processing flow for vectorization is set to the processing pattern in which "the local device performs vectorization and the remote device performs RIP processing".

The processing flow for color conversion is determined in the following manner.

### <When the "Image Quality Priority" Mode is Set for the Output Mode>

The time required for converting the DAOF data color space into a Lab color space by the local device is 160 msec. The time required for converting the DAOF data color space from the device-independent color space to the remote device-dependent color space" by the remote device is 180 msec. The time required for converting the DAOF data color space to the remote device-dependent color space by the local device is 240 msec. The time required for converting the DAOF data color space to the remote device-dependent color space by the remote device is 260 msec.

The time required for converting the color space of the DAOF data to the remote device-dependent color space by the local device is the minimum color conversion processing time in this case. Accordingly, the processing flow for color conversion is set to the processing pattern in which "the local device converts the color space of the DAOF data from the local device-dependent color space to the remote device-dependent color space".

### <When the "Auto Selection" Mode is Set for the Output Mode>

In this case, the maximum color conversion speed is "60/0.24 = 250", which is higher than the print speed (= 40 ppm) . In this case, color conversion is required. The flow for color conversion is similar to that in the case where the "image quality priority" mode is set for the output mode.

### <When the "Print Speed Priority" Mode is Set for the Output Mode>

In this case, the maximum color conversion speed is "60/0.24 = 250", which is higher than the print speed (= 40 ppm) . In this case, color conversion is required. The flow for color conversion is similar to that in the case where the "image quality priority" mode is set for the output mode.

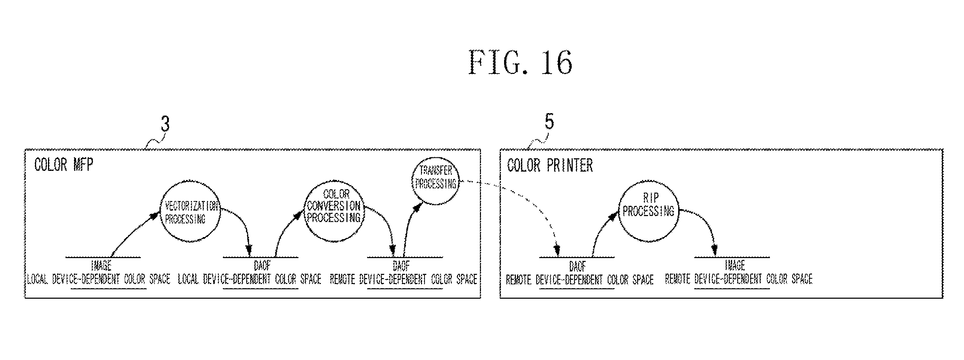

The processing flow for the remote copy exemplary case 2 will be described below with reference to Fig. 16. In the processing according to the processing flow in Fig. 16, the color MFP 3 inputs an image, vectorizes the input image, and converts the image into DAOF data regardless of the set output mode.

The color MFP 3 sends to the color printer 5 the data obtained by converting the color space of the converted DAOF data from the local device-dependent color space to the remote device-dependent color space. The color printer 5 performs RIP processing on the received DAOF data, rasterizes the DAOF data into image data, and prints the rasterized image data.

### <Remote Copy Exemplary Case 3>

In a remote copy exemplary case 3, the processing flow for vectorization and color conversion in the case where the user designates the color printer 4 as the remote device via the monochromatic MFP 6, which is the local device, to perform remote printing will be described.

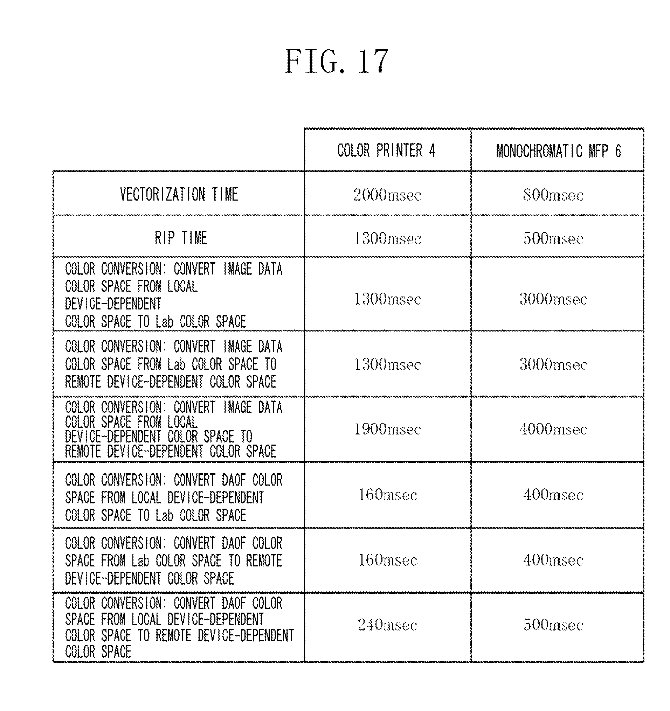

The parameter values necessary for determining the processing flow for vectorization and color conversion by each device are set as illustrated in Fig. 17. In the remote copy exemplary case 3, the data transfer time is 800 msec in the case of image data and 100 msec in the case of DAOF data.

The processing flow for vectorization is determined in the following manner.

### <When the "Image Quality Priority" Mode is Set for the Output Mode>

In this case, vectorization is required. Here, the time required in the above-described processing pattern (A-1) is 2,200 msec. The time required in the above-described processing pattern (A-2) is 2,100 msec. The time required in the above-described processing pattern (A-3) is 4,100 msec. Accordingly, the time required in the above-described processing pattern (A-2) is the "minimum vectorization time plus RIP time". Thus, the processing flow for vectorization is set to the processing pattern in which "the local device performs vectorization and RIP processing".

### <When the "Auto Selection" Mode is Set for the Output Mode>

The time required in the case where the local device performs vectorization and RIP processing is the "minimum vectorization time plus RIP time" (2,100 msec).

Accordingly, the "maximum vectorization speed plus RIP speed" is "60/2.1 = 28.5...", which is lower than the print speed (= 30 ppm).

Furthermore, an input resolution of the monochromatic MFP 6 and the resolution for the engine of the color printer 4 are at the same level. Moreover, the image transfer time is shorter than the sum of (processing time for vectorization by the local device) + (DAOF data transfer time) + (processing time for RIP processing by the remote device). Accordingly, vectorization is not required in this case.

### <When the "Print Speed Priority" Mode Is Selected for the Output Mode>

The "maximum vectorization speed plus RIP speed" is lower than the print speed. Furthermore, the image transfer time is shorter than the sum of (processing time for vectorization by the local device) + (DAOF data transfer time) + (processing time for RIP processing by the remote device). Accordingly, vectorization is not required in this case.

The processing flow for color conversion is determined in the following manner.

### <When the "Image Quality Priority" Mode Is Set for the Output Mode>

The time required for converting the DAOF data color space from the local device-dependent color space to the device-independent color space by the local device is 400 msec. The time required for converting the color space of the image from the device-independent color space to the remote device-dependent color space" by the remote device is 1, 300 msec. The time required for converting the DAOF data color space from the local device-dependent color space to the remote device-dependent color space by the local device is 500 msec. The time required for converting the color space of the input image from the local device-dependent color space to the remote device-dependent color space by the remote device is 1, 900 msec.

Accordingly, the time required in the case of the processing pattern in which the local device converts the color space of the DAOF data into the remote device-dependent color space is the minimum color conversion processing time.

Accordingly, the processing flow for color conversion is set to the processing pattern in which "the local device converts the color space of the DAOF data from the local device-dependent color space to the remote device-dependent color space".

### <When the "Auto Selection" Mode is Set for the Output Mode>

The time required for converting the color space of the input image to the device-independent color space by the local device is 3,000 msec. The time required for converting the color space of the image from the device-independent color space to the remote device-dependent color space" by the remote device is 1,300 msec. The time required for converting the color space of the input image from the local device-dependent color space to the remote device-dependent color space by the local device is 4,000 msec. The time required for converting the color space of the input image data from the local device-dependent color space to the remote device-dependent color space by the remote device is 1,900 msec.

The time required in the case where the remote device converts the color space of the input image to the remote device-dependent color space is the minimum color conversion processing time (1,900 msec).

In this case, the maximum color conversion speed is "60/1.9 = 31.5...", which higher than the print speed (= 30 ppm) . In this case, color conversion is required.

The processing flow for color conversion is set to the processing pattern in which "the remote device converts the color space of the transferred image from the local device-dependent color space to the remote device-dependent color space".

### <When the "Print Speed Priority" Mode Is Selected for the Output Mode>

In this case, it is determined that color conversion is required, just as in the case where the "auto selection" mode is set for the output mode. The processing flow for color conversion is set to the processing pattern in which the "remote device converts the color space of the transferred image from the local device-dependent color space to the remote device-dependent color space".

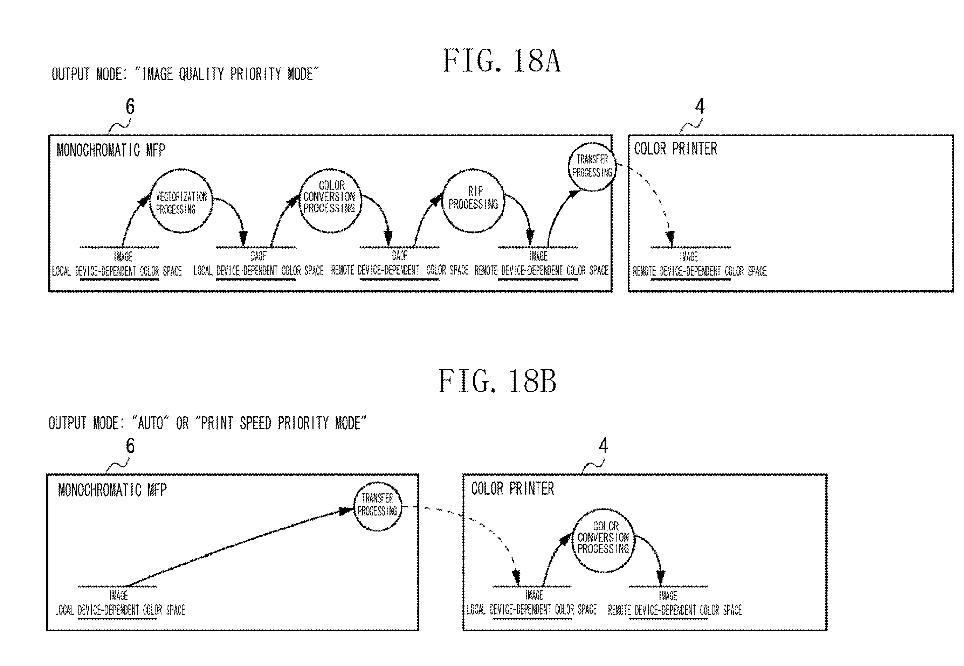

Figs. 18A and 18B each illustrate a processing flow according to the remote copy exemplary case 3.

Fig. 18 A illustrates an example in which the "image quality priority" mode is set for the output mode. The image input by the monochromatic MFP 6 is vectorized and converted into DAOF data.

Then, the color space of the converted DAOF data is converted from a monochromatic MFP 6-dependent color space to a color printer 4-dependent color space.

Furthermore, the monochromatic MFP 6 performs RIP processing on the DAOF data to rasterize the DAOF data into a bitmap image. Then, the monochromatic MFP 6 transfers the bitmap image to the color printer 4. When the color printer 4 receives the transferred bitmap image, the color printer 4 prints the bitmap image without performing image processing thereon.

Fig. 18B illustrates an example in which the "auto selection" mode or the "print speed priority" mode is set for the output mode.

The monochromatic MFP 6 performs neither vectorization nor color conversion on the input image, and sends the input image to the color printer 4.

The color printer 4 converts the color space of the transferred image from the monochromatic MFP 6-dependent color space to the color printer 4-dependent color space, and then prints the color-converted bitmap image.

As described above, according to the present exemplary embodiment, in performing remote copying, vectorized data and raster image data can be selectively used according to the user setting. Thus, the user can perform desired remote copying. Furthermore, in performing remote copying, a setting as to whether vectorization and/or color matching processing is required can be appropriately performed. Accordingly, remote copying can be performed with a high productivity.

In addition, remote copying that satisfies a user demand for image quality or a speed of remote copying can be performed.

Furthermore, an image quality in remote copying can be improved as much as possible without affecting the productivity.

### Other Exemplary Embodiments

The present invention can be applied to a system including a plurality of devices and to an apparatus that includes one device. For example, the present invention can be applied to a scanner, a printer, a personal computer, a copying machine, a multifunction peripheral, and a facsimile apparatus.

Furthermore, the present invention can also be achieved by providing a system or a device with a storage medium (or a recording medium) which stores program code of software implementing the functions of the embodiments and by reading and executing the program code stored in the storage medium with a computer of the system or the device (a CPU or a micro processing unit (MPU)). In this case, the program code itself, which is read from the storage medium, implements the functions of the embodiments mentioned above, and accordingly, the storage medium storing the program code constitutes the present invention.

The program can be configured in any form, such as object code, a program executed by an interpreter, and script data supplied to an OS.

As the storage medium for supplying such program code, a floppy disk, a hard disk, an optical disk, a magneto-optical disk (MO), a compact disk read-only memory (CD-ROM), a CD-recordable (CD-R), a CD-rewritable (CD-RW), a magnetic tape, a nonvolatile memory card, a ROM, and a digital versatile disk (DVD) (DVD-read only memory (DVD-ROM), DVD-recordable (DVD-R)), for example, can be used.

The above program can also be supplied by connecting to a web site on the Internet by using a browser of a client computer and by downloading the program from the web site to a storage medium such as a hard disk. In addition, the above program can also be supplied by downloading a compressed file that includes an automatic installation function from the web site to a storage medium such as a hard disk. The functions of the above embodiments can also be implemented by dividing the program code into a plurality of files and downloading each divided file from different web sites. That is, a World Wide Web (WWW) server for allowing a plurality of users to download the program file for implementing the functional processing according to the present invention.

In addition, the above program can also be supplied by distributing a storage medium, such as a CD-ROM, which stores the program according to the present invention after an encryption thereof; by allowing the user who is qualified for a prescribed condition to download key information for decoding the encryption from the web site via the Internet; and by executing and installing on the computer the encrypted program code by using the key information.

In addition, the functions according to the embodiments described above can be implemented not only by executing the program code read by the computer, but also implemented by the processing in which an operating system (OS) or the like carries out a part of or the whole of the actual processing based on an instruction given by the program code.

Further, in another aspect of the embodiment of the present invention, after the program code read from the storage medium is written in a memory provided in a function expansion board inserted in a computer or a function expansion unit connected to the computer, a CPU and the like provided in the function expansion board or the function expansion unit carries out a part of or the whole of the processing to implement the functions of the embodiments described above.

While the present invention has been described with reference to exemplary embodiments, it is to be understood that the invention is not limited to the disclosed exemplary embodiments. The scope of the following claims is to be accorded the broadest interpretation so as to encompass all modifications, equivalent structures, and functions.

## Claims

1. An image processing apparatus (1001) comprising:
input means (302) configured to input image data;
vectorization means (308) configured to convert the image data input by the input means (302) into vectorized data by vectorizing at least one portion of the image data;
receiving means (303) configured to receive a setting for outputting by an external image output apparatus an image based on the image data input by the input means (302); and
sending means (305) configured to send to the external image output apparatus one of the image data input by the input means (302) or the vectorized data obtained by the vectorization means (308) based on the setting received by the receiving means (303) .

2. An image processing apparatus (1001) according to claim 1, further comprising determination means (301) configured to determine whether to convert the image data into the vectorized data based on the setting received by the receiving means (303),
wherein the sending means (305) sends to the external image output apparatus one of the image data or the vectorized data based on a result of determination by the determination means (301).

3. An image processing apparatus (1001) according to claim 1 or claim 2, wherein, if the setting received by the receiving means (303) includes information for prioritizing a time required until the image based on the image data input by the input means (302) is completely output by the external image output apparatus, the sending means (305) is configured to send the image data to the external image output apparatus.

4. An image processing apparatus (1001) according to any preceding claim, further comprising capacity information acquisition means (306) configured to acquire capacity information about the external image output apparatus,
wherein the sending means (305) is configured to send to the external image output apparatus one of the image data or the vectorized data based on the capacity information acquired by the capacity information acquisition means (306) .

5. An image processing apparatus (1001) according to claim 4, wherein the capacity information acquired by the capacity information acquisition means (306) indicates an image output speed of the external image output apparatus, and
wherein, if the setting received by the receiving means (303) includes information for prioritizing a time required until the image based on the image data input by the input means (302) is completely output by the external image output apparatus, and if a time required to send to the external image output apparatus data obtained by rasterizing the vectorized data obtained by the vectorization means (308) is shorter than the time required until the image is completely output by the external image output apparatus, the sending means (305) is configured to send the vectorized data to the external image output apparatus.

6. An image processing apparatus (1001) according to any preceding claim, wherein, if the setting received by the receiving means (303) includes information for prioritizing a quality of the image to be output by the external image output apparatus based on the image data input by the input means (302), the sending means (305) is configured to send the vectorized data to the external image output apparatus.

7. An image processing apparatus (1001) according to claim 4, wherein the capacity information acquired by the capacity information acquisition means (306) indicates an output resolution of the external image output apparatus, and
wherein, if the setting received by the receiving means (303) includes neither the information for prioritizing the quality of the image to be output by the external image output apparatus based on the image data input by the input means (302) nor the information for prioritizing the time required until the image is completely output by the external image output apparatus, the sending means (305) is configured to send to the external image output apparatus one of the image data or the vectorized data based on a resolution of the image data input by the input means (302) and the output resolution of the external image output apparatus.

8. An image processing apparatus (1001) according to claim 7, wherein, if the output resolution of the external image output apparatus acquired by the capacity information acquisition means (306) is lower than the resolution of the image data input by the input means (302), the sending means (305) is configured to send the image data to the external image output apparatus.

9. An image processing apparatus (1001) according to claim 7, wherein, if the output resolution of the external image output apparatus acquired by the capacity information acquisition means (306) is higher than the resolution of the image data input by the input means (302), the sending means (305) is configured to send the vectorized data to the external image output apparatus.

10. An image processing apparatus (1001) according to any preceding claim, further comprising rasterization means (311) configured to rasterize the vectorized data to generate raster image data,
wherein the sending means (305) is configured to send one of the image data or the vectorized data based on a rasterization processing speed of the rasterization means (311) and a rasterization processing speed of the external image output apparatus.

11. An image processing apparatus (1001) according to any preceding claim, wherein one of the image data or the vectorized data to be sent by the sending means (305) includes one of information indicating processing to be performed by the external image output apparatus or remote copy information including information indicating processing performed by the image processing apparatus (1001).

12. An image processing apparatus (1001) according to claim 11, wherein, if the sending means (305) sends the image data to the external image output apparatus, the remote copy information includes information indicating whether to cause the external image output apparatus to vectorize the image data.

13. An image processing apparatus (1001) according to any preceding claim, wherein the input means (302) is configured to input color image data dependent on a color reproduction characteristic of the input means (302),
wherein the image processing apparatus (1001) further comprises conversion means (309) configured to convert one of the color image data or color vectorized data obtained by converting the color image data with the vectorization means (308) into data independent from the color reproduction characteristic of the input means (302), and
wherein the sending means (305) is configured to send one of color image data dependent on the color reproduction characteristic of the input means (302), color vectorized data dependent on the color reproduction characteristic of the input means (302), color image data independent from the color reproduction characteristic of the input means (302), or color vectorized data independent from the color reproduction characteristic of the input means (302) based on the setting received by the receiving means (303).

14. An image processing apparatus (1002) comprising:
receiving means (302) configured to receive remote copy job data including image data and remote copy information describing a format of the image data and/or a content of processing to be performed on the image data;
at least one image processing means (308, 309, 311) configured to perform image processing on the image data received by the receiving means (302);
selection means (301) configured to select one of the at least one image processing means based on the remote copy information received by the receiving means (302); and
image output means (307) configured to output an image based on one of the image data or image data obtained by one of the at least one image processing means selected by the selection means (301).

15. An image processing apparatus (1002) according to claim 14, wherein the selection means (301) is capable of selecting none of the at least one image processing means with respect to the image data.

16. An image processing apparatus according to claim 14 or 15, wherein the at least one image processing means includes at least one of a vectorization means (308) configured to convert the image data into vectorized data by vectorizing at least one portion of the image data, a rasterization means (311) configured to rasterize vectorized data, a resolution conversion means configured to convert a resolution of the image data, or a color space conversion means (309) configured to convert a color space of the image data.

17. An image processing apparatus (1002) according to claim 16, wherein, if the image data received by the receiving means (302) is vectorized data obtained by vectorizing at least one portion of the image data, the selection means (301) selects the rasterization means (311).

18. An image processing apparatus (1002) according to claim 16, wherein, if the image data received by the receiving means (302) is raster image data, the selection means (301) determines whether to select the vectorization means (308) with respect to the image data based on the remote copy information.

19. A method comprising:
inputting (S703) image data; and
sending (S707) to the external image output apparatus one of the input image data or vectorized data converted from the input image data by vectorizing at least one portion of the image data, based on a predetermined setting for outputting by an external image output apparatus an image based on the input image data.

20. A method comprising:
receiving (S901) remote copy job data including image data and remote copy information describing a format of the image data and/or a content of processing to be performed on the image data;
selecting (S902) one of at least one image processing operation based on the received remote copy information; and
outputting (S903) an image based on one of the image data or image data generated with the selected image processing operation.

21. A control program which, when run on a device, causes an image processing apparatus to perform a method according to claim 19.

22. A control program which, when run on a device, causes an image processing apparatus to perform a method according to claim 20.

23. A storage medium storing a control program according to claim 21 or claim 22.
